Europäisches Patentamt

European Patent Office

Office européen des brevets

(11) Publication number:

**0 403 155**
**A2**

# EUROPEAN PATENT APPLICATION

(21) Application number: 90306161.2

(51) Int. Cl.5: **G06F 9/44**

(22) Date of filing: 06.06.90

(30) Priority: 08.06.89 US 364020

(43) Date of publication of application:
19.12.90 Bulletin 90/51

(84) Designated Contracting States:
AT BE CH DE DK ES FR GB GR IT LI LU NL SE

(71) Applicant: DIGITAL EQUIPMENT
CORPORATION
111 Powdermill Road
Maynard, MA 01754(US)

(72) Inventor: **Barabash, William**
**One Seneca Court**
**Acton, Massachusetts, 01720(US)**
Inventor: **Yerazunis, William S.**
**78 Apsley Street**
**Hudson, Massachusetts, 01749(US)**

(74) Representative: **Goodman, Christopher et al**
**Eric Potter & Clarkson St. Mary's Court St.**
**Mary's Gate**
**Nottingham NG1 1LE(GB)**

(54) System for performing rule partitioning in a RETE network.

(57) A rule-partitioning system for converting at least a portion of a target expert system program to a rule partitioned RETE network for execution on multiple processors, including a rule partitioning portion for assigning different rules of the target expert system program to different partitions on the basis of previously collected processing statistics and on the use of node sharing; and a compiler for converting the target expert system program to the RETE network, wherein the rules of the RETE network are assigned to the multiple processors in accordance with the partition assignments.

FIG. 3A

100 COMPILE EXPERT SYSTEM
PROGRAM TO RUN ON SINGLE
PROCESSOR COMPILED PROGRAM
INCLUDING DIRECTIVES TO
COLLECT PROCESSING STATISTICS

101 RUN COMPILED PROGRAM ON A
SINGLE PROCESSOR ONE OR MORE
TIMES TO COLLECT PROCESSING STATISTICS

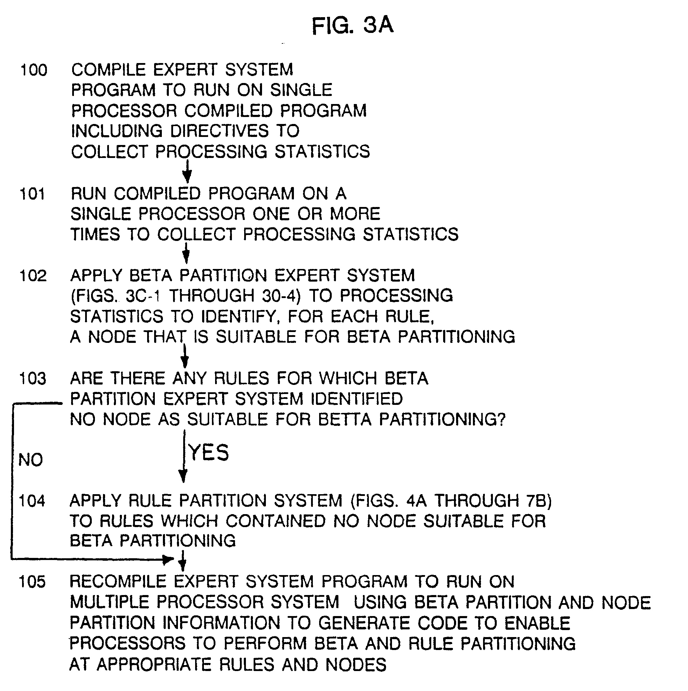

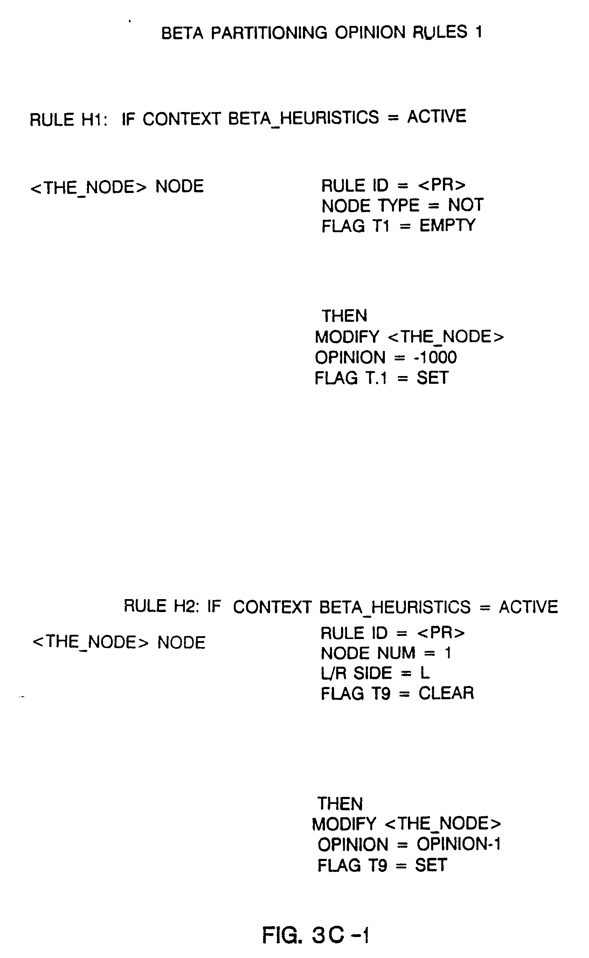

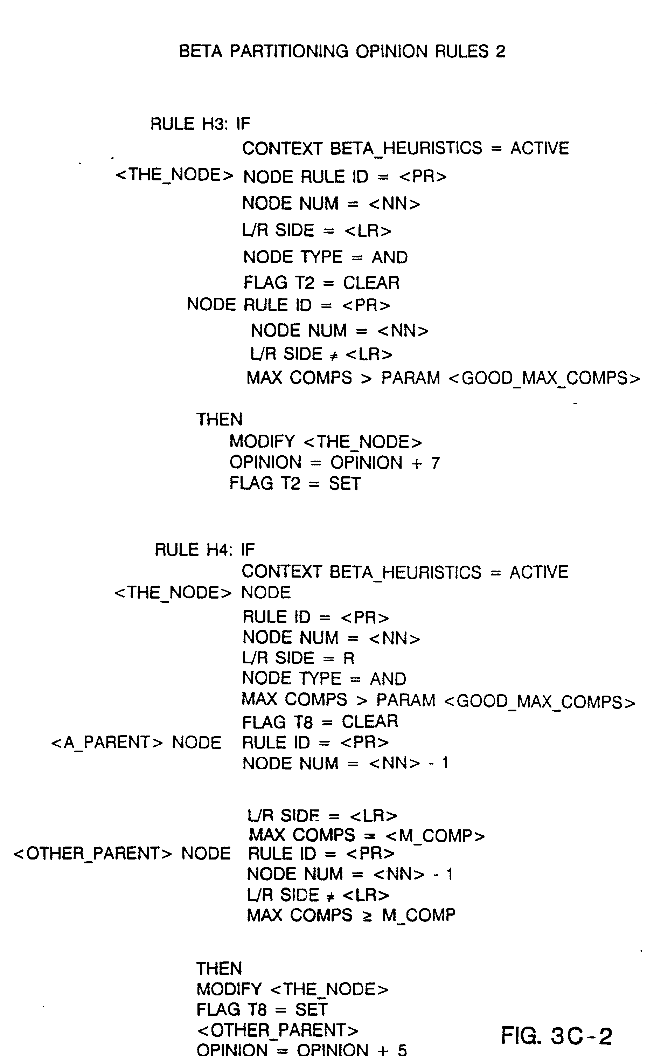

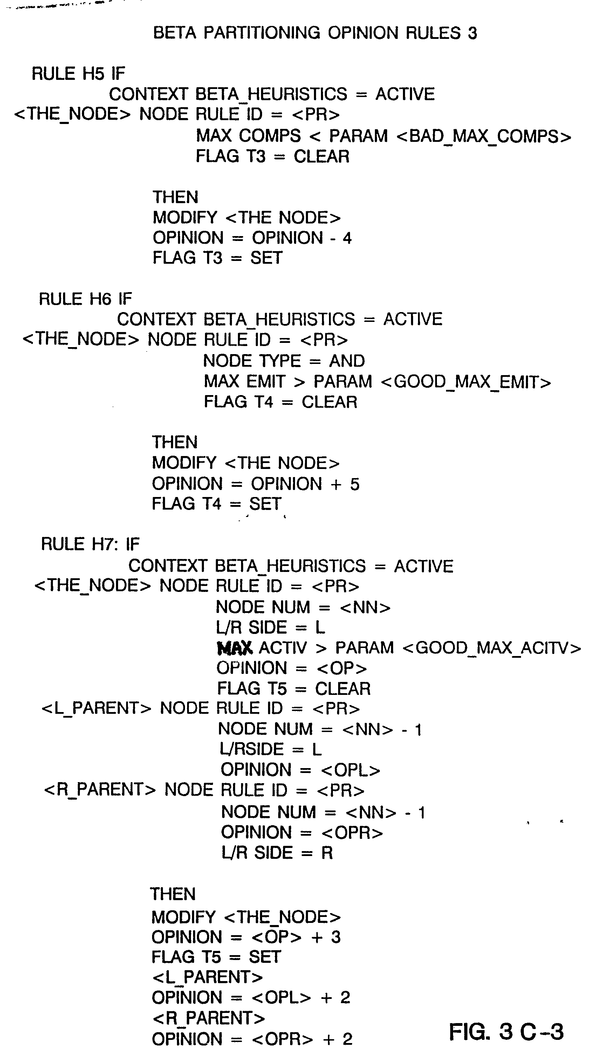

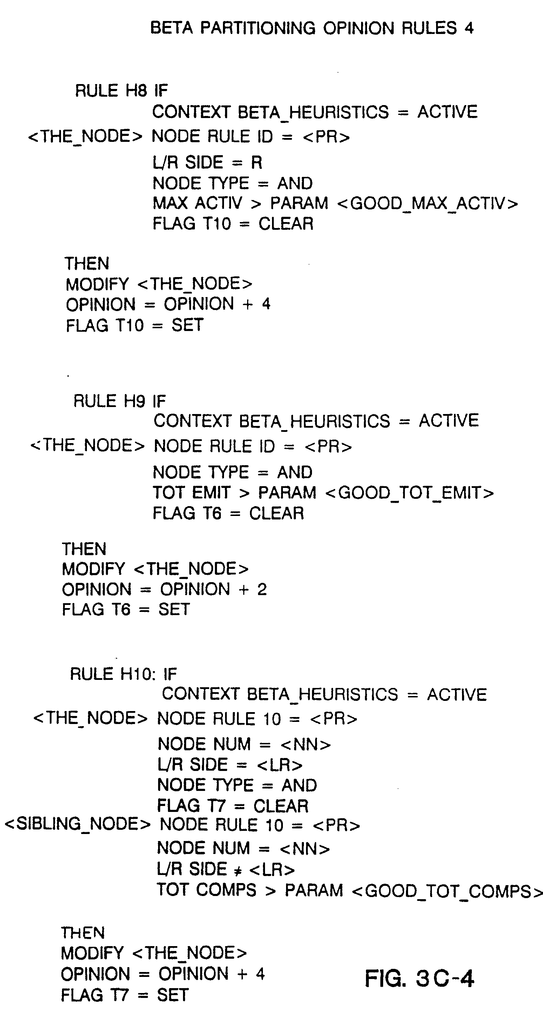

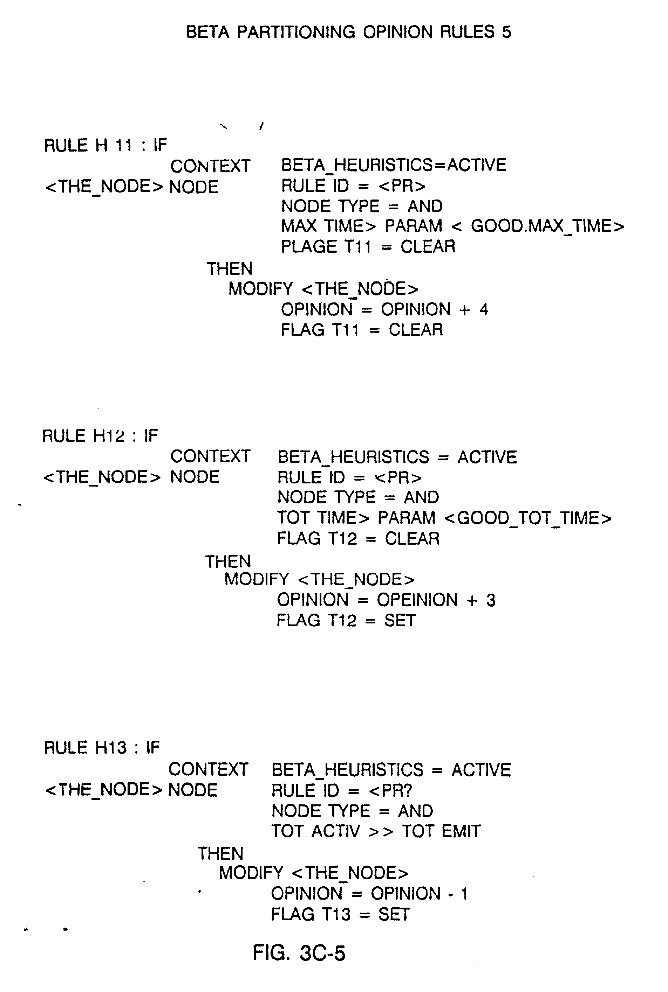

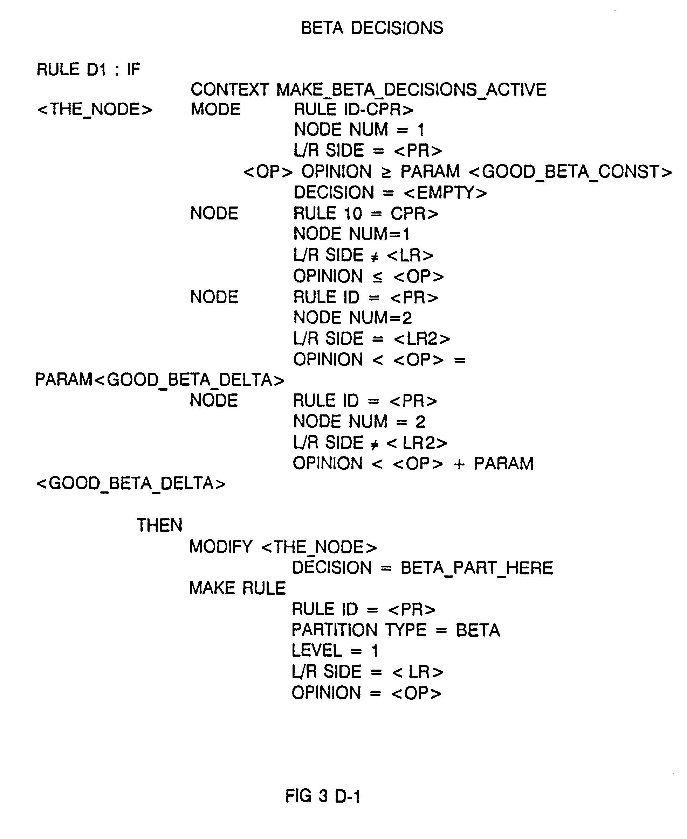

102 APPLY BETA PARTITION EXPERT SYSTEM
(FIGS. 3C-1 THROUGH 30-4) TO PROCESSING
STATISTICS TO IDENTIFY, FOR EACH RULE,
A NODE THAT IS SUITABLE FOR BETA PARTITIONING

103 ARE THERE ANY RULES FOR WHICH BETA
PARTITION EXPERT SYSTEM IDENTIFIED
NO NODE AS SUITABLE FOR BETTA PARTITIONING?

NO            YES

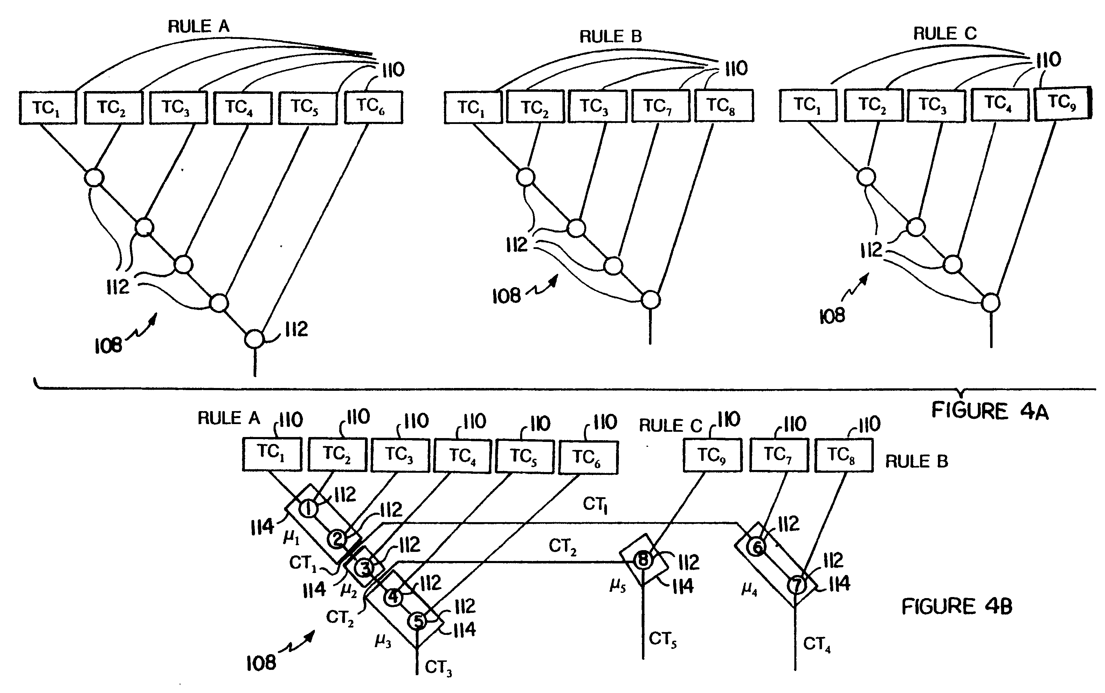

104 APPLY RULE PARTITION SYSTEM (FIGS. 4A THROUGH 7B)
TO RULES WHICH CONTAINED NO NODE SUITABLE FOR
BETA PARTITIONING

105 RECOMPILE EXPERT SYSTEM PROGRAM TO RUN ON
MULTIPLE PROCESSOR SYSTEM USING BETA PARTITION AND NODE
PARTITION INFORMATION TO GENERATE CODE TO ENABLE
PROCESSORS TO PERFORM BETA AND RULE PARTITIONING
AT APPROPRIATE RULES AND NODES

EP 0 403 155 A2

## INCORPORATION BY REFERENCE

U. S. Patent Application Ser. No. 103,364, filed September 30, 1987, in the names of William Barabash and William S. Yerazunis, for Method For Operating A Parallel Processing System And Related Apparatus, incorporated herein by reference. (See Appendix A)

## FIELD OF THE INVENTION

The invention relates generally to the field of artificial intelligence systems, and more particularly to rule-based systems in which various conditions defined by the rules are processed in the form of reticular network to facilitate efficient identification of the rules in condition for firing.

## BACKGROUND OF THE INVENTION

Rule-based artificial intelligence systems, generally known as expert systems, typically include a set of rules, forming a "knowledge base", one or more facts in a working memory, and an inference engine that manipulates the rules in response to the facts in the working memory. By a process known as "inference", the inference engine attempts to match conditions in each of the rules to the facts in the working memory. If the conditions of a particular rule match the facts, the rule is said to "fire", and the inference engine then performs actions or operations specified in the rule. These operations may include, for example, addition, deletion and/or modification of facts in the working memory, transmission of results to a user, and so forth. The condition matching/firing sequence is sometimes referred to as a "recognize act" cycle, with "recognize" referring to the portion of the operation in which the inference engine compares conditions of the rules to the facts in working memory to determine which, if any, rules fire, and "act" referring to the portion of the operation in which the inference engine actually performs the actions and operations specified in the rule. If, during firing of a rule, the inference engine adds, deletes or modifies a fact, the inference engine may repeat these operations in response to the new or modified facts in the working memory, which may, in turn, cause other rules to fire. Rule processing begins when an addition, modification or deletion is made to the facts in the working memory, and proceeds iteratively until no further additions, modifications or deletions are made to the facts in the working memory.

More particularly, each rule includes one or more conditions, which are collectively referred to as the "left-hand side", and a "right-hand side" which contains an action list, which identifies one or more operations performed if the rule fires. The facts in the working memory are typically organized as one or more relations, with each relation comprising one or more entries, or items of data. Each entry in a relation, in turn, is identified as having one or more slots. Each relation is identified by a class name, and each slot is identified by a slot name. A condition identifies a relation by class name, one or more slots, by name, and, optionally, a set of limits or requirements on the values for each named slot. In the comparison operation, the inference engine determines whether the relation in the working memory that corresponds to the class name in the condition contains an entry whose slot values correspond to the slot values set forth in the condition. If so, the condition is satisfied. However, if the working memory does not have an entry whose slots contain the values specified in the condition, the condition is not satisfied. To determine whether a rule is in condition to fire, the inference engine performs the existence test in connection with each condition in the rule.

The existence test can be somewhat more complicated, particularly in connection with a rule in which one or more of a condition's slot values are expressed as variable values. If a condition identifies a class and one or more slot values, at least one of which is specified by a variable and the values identified for each of the other slot names match the values in their corresponding slots in the working memory entry, the condition is satisfied by each entry in the relation identified by the class name in which the variable is satisfied. In the match operation for a condition with a variable, the inference engine establishes one or more binding lists for the variables that identify the set of values in the slots in the various entries in the relation which can satisfy the condition. The values of the variables in each binding list are propagated

2

through subsequent conditions comprising the rule's left hand side to determine whether each successive condition is satisfied, with each set of values comprising the binding lists that satisfy the rule resulting in a different instantiation of the rule. The inference engine may then perform a conflict resolution operation among the rules and instantiations to select a rule, and specifically an instantiation if the rule has multiple instantiations, for firing.

One way in which the inference engine may determine if the rules' conditions are satisfied is to test each of the conditions of each of the rules against the facts in the working memory and keep track of the rules whose conditions are satisfied. However, in many circumstances the same condition is included in a number of rules. Further, in most circumstances, it is not necessary to evaluate every working memory relation against every rule during every recognize/act cycle. Instead, partial lists of relation/rule associations can be maintained and incremental updates performed to these lists as relations are added, deleted or modified. To avoid the necessity of testing or retesting such conditions for each rule, reticular, or "RETE" networks have been developed. In a reticular network, the conditions of all the rules are organized as a series of test nodes, with one test node being associated with each condition. Each of the rules, in turn, is represented by a terminal node. The test nodes are connected to the terminal nodes through a network of join nodes, each of which represents a logical operation in connection with each successive condition in the rule. During the "recognize" portion of the recognize/act cycle, tokens are passed between the nodes representing successful comparisons, with the tokens that eventually reach the terminal node representing the various instantiations of the rule. These tokens which represent successful comparisons are termed "beta tokens."

In beta-token partitioning systems, these beta tokens are divided among multiple processors of a computer system in order to approximately equally divide the computational load among the processors.

## SUMMARY OF THE INVENTION

The invention provides a new and improved system for rule partitioning in an expert system program to run on multiple processors.

In brief summary, in one aspect the invention is a rule-partitioning system for converting at least a portion of a target expert system program to a rule partitioned RETE network for execution on multiple processors. The invention includes a rule partitioning portion for assigning different rules of the target expert system program to different partitions on the basis of previously collected processing statistics and on the use of node sharing; and a compiler for converting the target expert system program to the RETE network, wherein at least some of the rules of the RETE network are assigned to the multiple processors in accordance with the partition assignments.

Preferred embodiments include the following features. The rule partitioning portion includes an iteration module for temporarily assigning a rule selected from a group of unassigned rules to each of the different partitions; an evaluation module for estimating a performance measure for each such temporary assignment of the selected rule, the performance measure being derived from the processing statistics and taking into account node sharing; and an assignment module for permanently assigning the selected rule to the partition which yields the best performance measure. The performance measure is an estimate of the time it would take for the multiple processors to complete at least one recognize-act cycle of the portion of the target expert system program to be rule-partitioned and the selected rule is the unassigned rule requiring the most time to process. Further, the processing statistics include the number of activations per recognize-act cycle for the nodes of the RETE network and the estimate of the time to complete at least one recognize-act cycle is derived by computing a partition process time for each partition for each recognize-act cycle, the partition process time being computed by summing the number of activations of each of the nodes which make up the rules that are assigned to that partition. Also, a partition to which the selected rule is temporarily assigned may have permanently assigned rules that share nodes with the selected rule and the rule partitioning portion takes into account node sharing by including the shared node's contribution to the partition process time only once per recognize-act cycle. In addition, the estimate of the time to complete at least one recognize-act cycle is derived by summing the largest partition process times for each recognize-act cycle over all recognize-act cycles. In accordance with yet another feature, the nodes are grouped into a plurality of blocks such that each block of the plurality of blocks represents nodes that are shared by the same set of rules and the processing statistics include the number of activations per recognize-act cycle for the blocks of the RETE network.

In another aspect, the invention is a system that includes a uniprocessor compiler for compiling a target

3

system program to form a RETE network for execution on a single processor, some of the nodes of the uniprocessor RETE network possibly being shared by more than rule; a processor for executing the target expert system program, the processor obtaining processing statistics in connection with each node of the uniprocessor RETE network during execution; a rule partitioning portion for assigning different rules of at least a portion of the target expert system program to different partitions based on the processing statistics and on the use of node sharing; and a multiprocessor compiler for converting the target expert system program to a RETE network for execution on multiple processors, wherein the rules of the multiprocessor RETE network are assigned to the multiple processors in accordance with the partition assignments.

In yet another aspect, the invention is a method of rule partitioning a target system program. The method includes the steps of compiling the target expert system program to form a RETE network for execution on a single processor; identifying the nodes of the network that are shared by more than one rule of the target expert system program; executing the target expert system program on a single processor to obtain processing statistics on the nodes of the RETE network; partitioning the rules of at least a portion of the target expert system program among the processors of a multiprocessor system, the process of partitioning taking into account the possibility of node sharing; and recompiling the target expert system program to form a RETE network for execution on the multiprocessor system wherein the rules of the target expert system program are assigned to processors in accordance with the partitioning.

In yet a further aspect, the invention is a computer program for use in connection with a computer. The computer program includes a uniprocessor compiler for enabling the computer to compile a target system program to form a RETE network for execution on a single processor, some of the nodes of the uniprocessor RETE network possibly being shared by more than rule; a module for enabling the computer to execute the target expert system program, the computer obtaining processing statistics in connection with each node of the uniprocessor RETE network during execution; a rule partitioning module for enabling the computer to assign different rules of at least a portion of the target expert system program to different partitions based on the processing statistics and on the use of node sharing; and a multiprocessor compiler module for enabling the computer to convert the target expert system program to a RETE network for execution on multiple processors, wherein the rules of the multiprocessor RETE network are assigned to the multiple processors in accordance with the partition assignments.

The invention uses node sharing in determining how to allocate the processing of rules of a RETE network among multiple processors. Among other advantages, this results in a significant improvement in the time it takes to run a target system program in comparison to conventional approaches to rule-partitioning, which either prevent or ignore node sharing.

## BRIEF DESCRIPTION OF THE DRAWINGS

This invention is pointed out with particularity in the appended claims. The above and further advantages of this invention may be better understood by referring to the following description taken in conjunction with the accompanying drawings, in which:

Figs. 1 and 2 depict an expert system with respect to which the invention is used;

Fig. 3A depicts a flow chart describing the operations of beta and rule partitioning performed in connection with the invention;

Figs. 3B-1 and 3B-2 depict data structures useful in understanding beta partitioning in accordance with the invention;

Figs. 3C- 1 through 3C-5 depict beta-token partitioning opinion rules and Figs. 3D-1 through 3D-4 depict beta decision rules, all of which are useful in connection with the beta-token partitioning in accordance with the invention;

Figs. 4A and 4B depict portions of a RETE network which is useful in understanding rule partitioning in accordance with the invention;

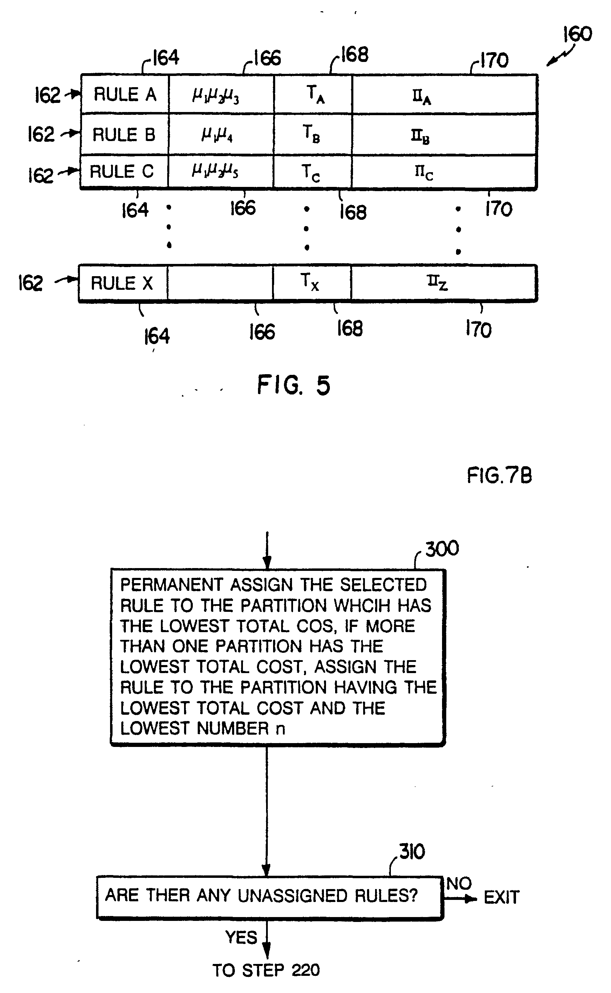

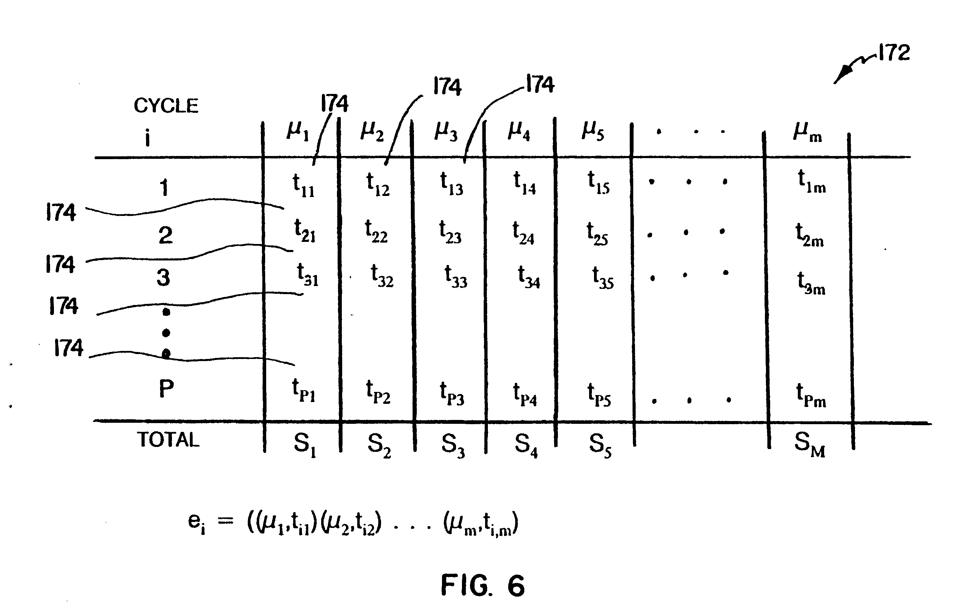

Figs. 5 and 6 depict data structures which are used in rule partitioning in accordance with the invention; and

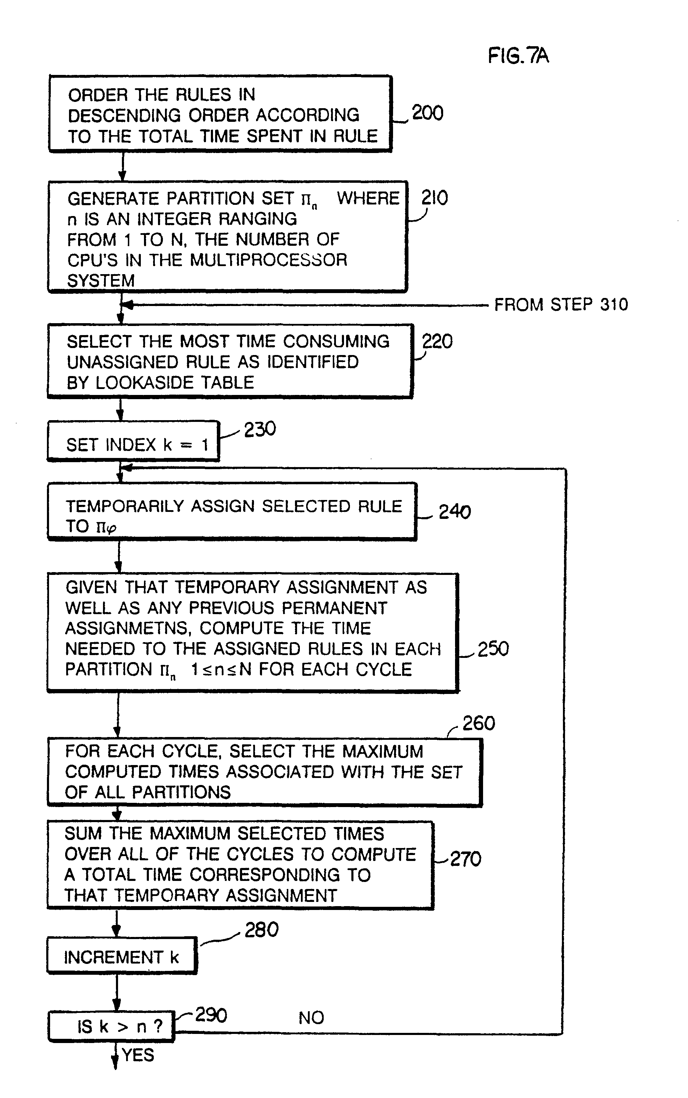

Figs. 7A and 7B depict a flow chart describing the operation of rule partitioning in accordance with the invention.

## DETAILED DESCRIPTION OF AN ILLUSTRATIVE EMBODIMENT

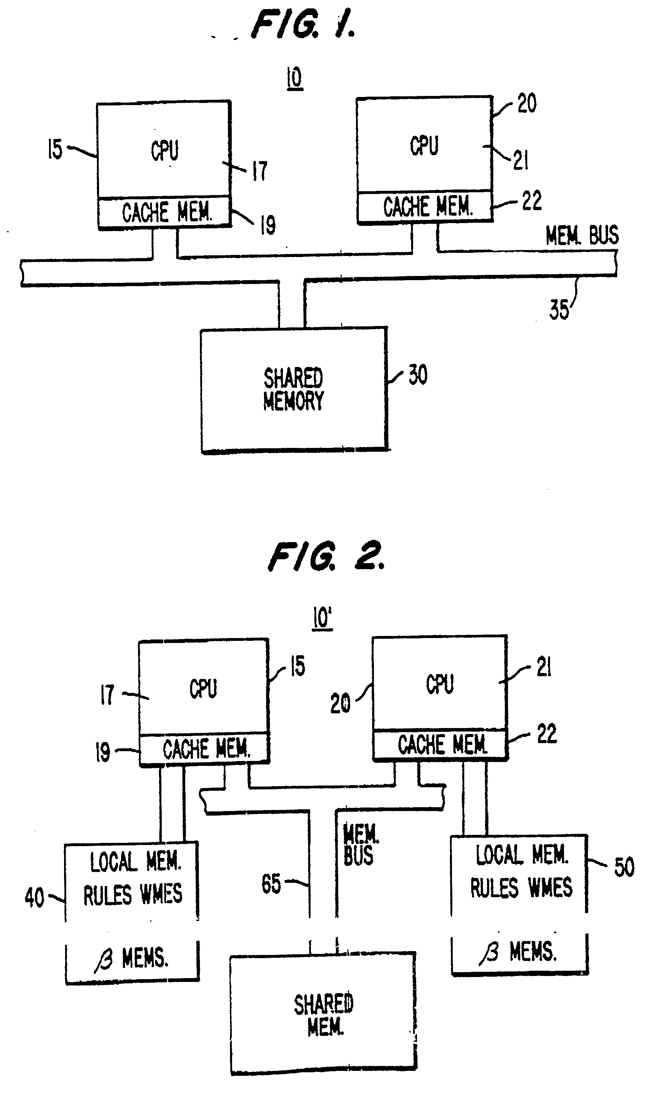

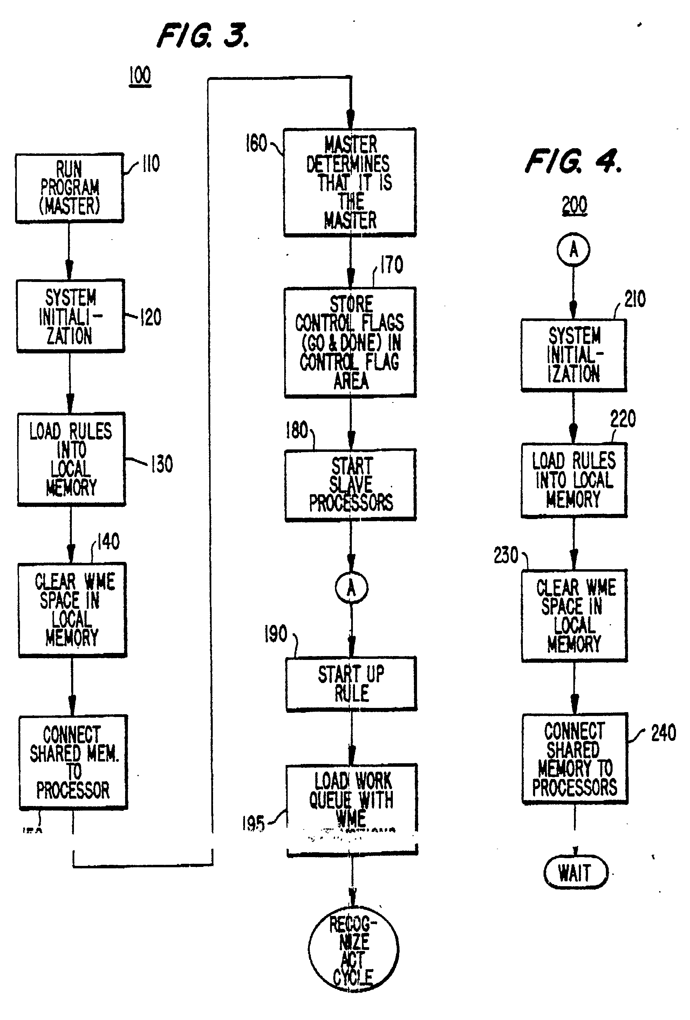

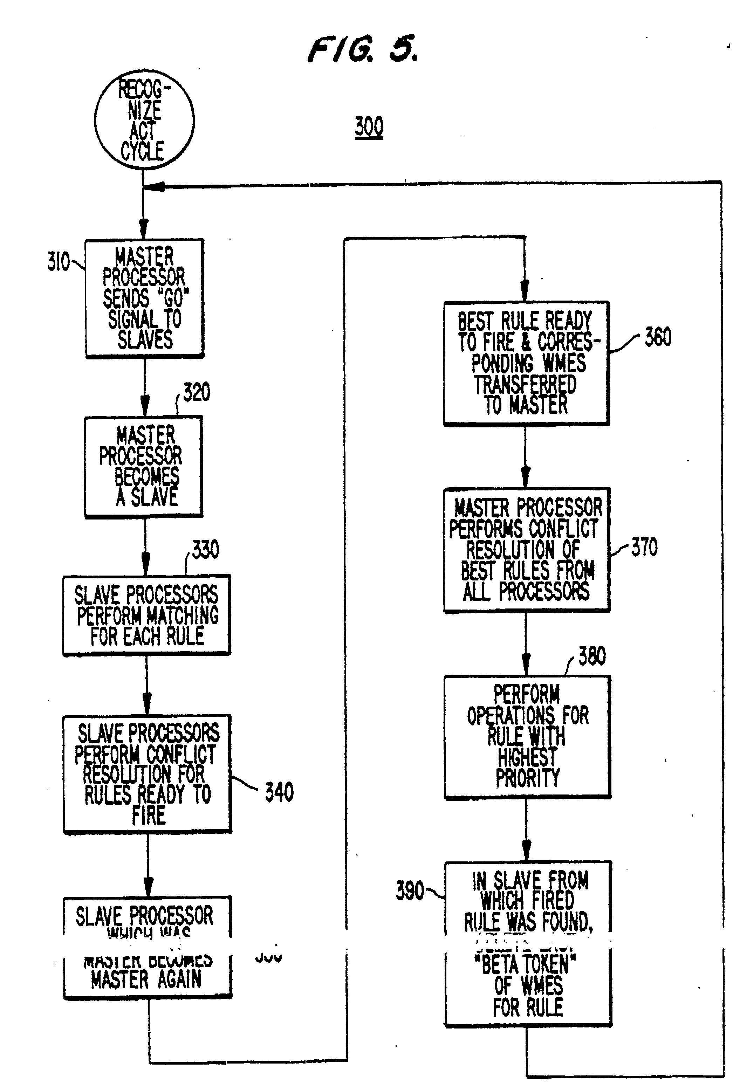

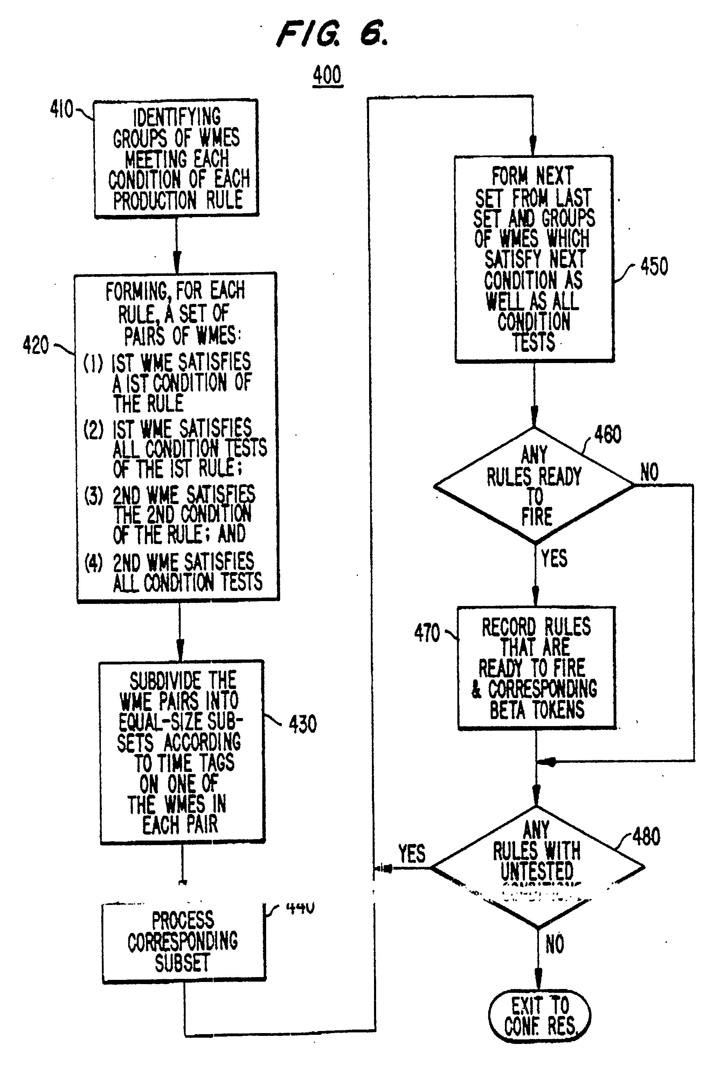

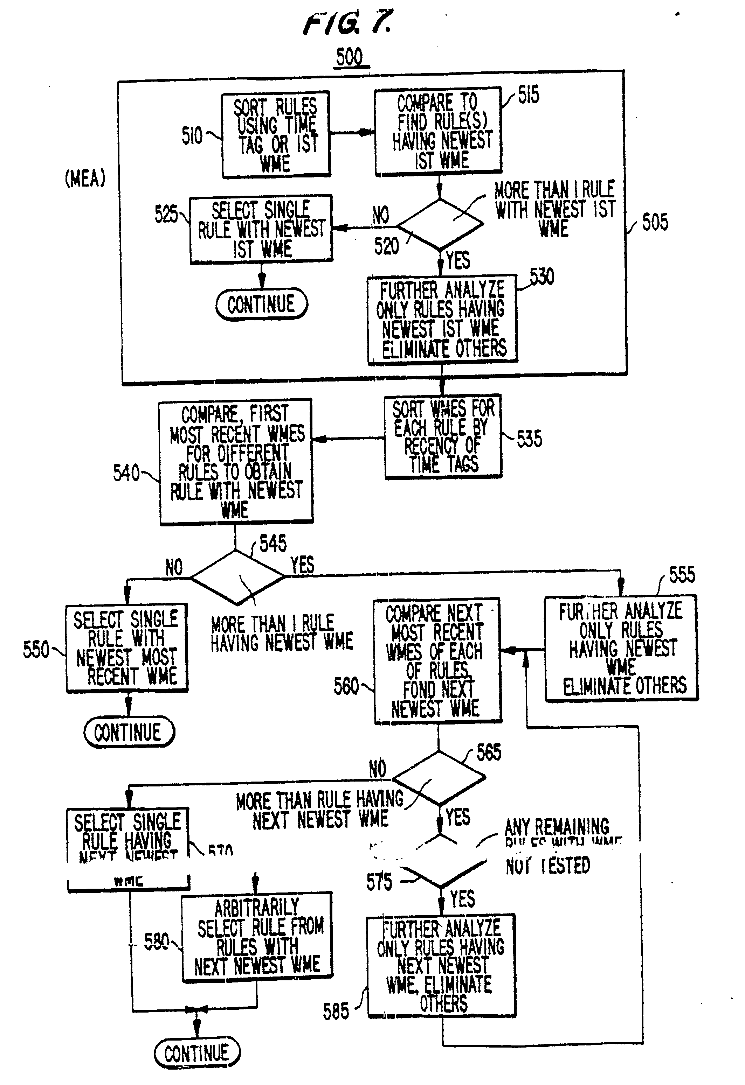

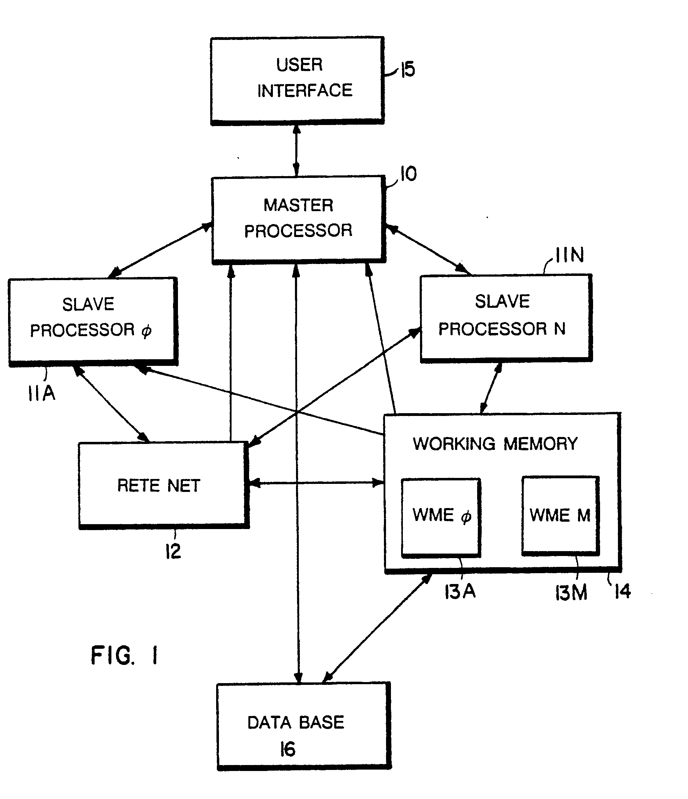

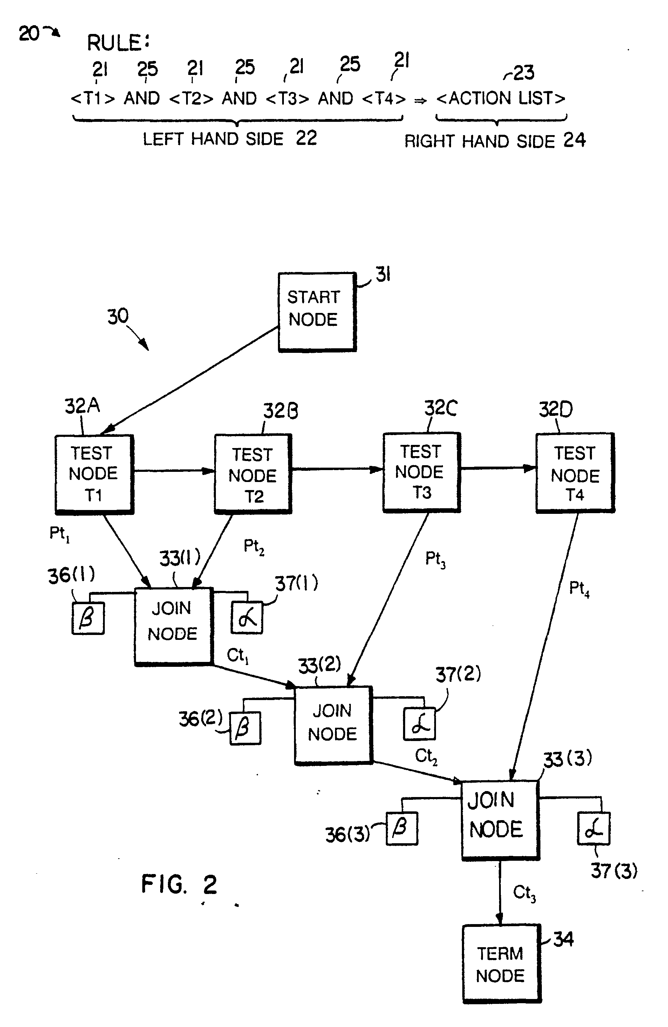

By way of background, the invention is useful in connection with an expert system such as depicted in Figs. 1 and 2. With reference to Fig. 1, the expert system includes a master processor 10 and a plurality of slave processors 11A through 11N (generally identified by reference numeral 11) that process rules organized in a RETE network 12 using working memory elements 13A through 13M (generally identified by reference numeral 13) in a working memory 14 and information provided by an operator at a user interface 15. The master processor 10 enables the system to be initialized, including the creation of an initial set of working memory elements 13 in the working memory 14 based on data in a database 16. In addition, the master processor 10 enables the slave processors 11 to operate to process the working memory elements 13 in relation to the rules in the RETE network 12. It will be appreciated that, during the rule processing operations, the master processor 10 may also assist in the rule processing operations, operating effectively as another slave processor 11.

The slave processors 11 process the rules organized in the RETE network 12 in an inference cycle. That is, in response to a change in the working memory elements 13 in the working memory 14, which may result from, for example, the creation of a new working memory element 13 by the deposit of information by the operator at the user interface 15, or by the creation of one or more working memory elements 13 by the firing of a rule in the RETE network 12 during a previous inference cycle, the slave processors 11 process the rules in the RETE network 12 using the working memory elements 13 then in the working memory 14, select one rule to execute, or fire, and perform actions identified in the rule. The actions may include, for example, deposit of a new working memory element 13 in the working memory 14, deletion of a working memory element 13 from the working memory 14, modification of a working memory element 13, transmission of a message to the user interface 15 for display to an operator, termination of operation, and the like. The system may iteratively perform one or a number of inference cycles, until either (1) no rule remains that has all of its conditions satisfied, or (2) one of the actions specified by a rule selected to fire is a termination of operation. At that point, the system may wait for the operator to deposit further information, thereby creating a change of the working memory elements 13 in the working memory 14, before beginning another inference cycle.

As noted above, the rules are organized in the form of the RETE network 12. By way of background, one example of a rule and its RETE network equivalent are shown in Fig. 2. With reference to Fig. 2, the rule, identified by reference numeral 20, includes one or more conditions 21A through 21D (generally identified by reference numeral 21) and logical connectors 25A through 25C (generally identified by reference numeral 25) that define logical relationships among the conditions 21, all of which are collectively identified as its "left hand side" 22, and an action list 23 comprising its "right hand side" 24. During an inference cycle, the set of conditions 21 comprising the left hand side 22 and the logical relationships defined by the logical connectors 25 are tested against the working memory elements 13 contained in the working memory 14 to identify those rules 20 whose left hand sides are satisfied. Those rules 20 whose left hand sides are satisfied are said to be in condition for firing.

After all of the rules have been processed to identify those in condition for firing, conflict resolution information (not shown), which may be included with the rules, is used to identify which rule of the one or more of the rules 20 that are in condition for firing will actually be fired. In firing a rule 20, one or more operations, as defined in the action list 23 comprising the rule's right hand side 24, are performed to complete the inference cycle. If the firing results in a creation, deletion or modification of a working memory element 13, another inference cycle may be performed to process the rules comprising the RETE network 12 in connection with the new collection of working memory elements 13.

The portion 30 of the RETE network 12 for the rule 20 is also shown in Fig. 2. The portion 30 includes a plurality of nodes, including a start node 31, a test node list 32 comprising one or more test nodes 32(i) ["i" being an integer; four test nodes, identified by reference numerals 32(1) through 32(4), are shown in Fig. 2], one or more join nodes 33(1) through 33(3) (generally identified by reference numeral 33) and a terminal node 34. Each of the test nodes 32 corresponds to a test of one of the conditions 21 in the left hand side 22 of the rule. Similarly, each join node 33 corresponds to a logical connector 25 in a rule. The last join node 33(3) in the sequence connects to the terminal node 34, which effectively represents the rule's action list 23.

In one embodiment of the RETE network 12, the test node list 32 essentially forms a linked list, and the start node 31 contains a pointer identifying a first test node 32(1) in the list 32. Each test node 32(i), in turn, contains a pointer to a subsequent test node 32(i+1), with the last test node 32 containing, instead of a pointer to a subsequent test node, a value identifying it as the last test node in the list 32. Each test node 32(i), in turn, defines a test condition and also contains a pointer to a join node 33 defining a logical connector 25. The join node 33(1) defining the first logical connector 25A in the rule 20 is pointed to by the test nodes 32(1) and 32(2) for the first two conditions in the rule, and the join node 33(i) ("i" is an integer)

5

for each subsequent logical connector 25(i) is pointed to by the preceding join node 33(i-1) and the test node 32(i+1) for the condition 21(i+1) in the rule 20 immediately after the logical connector 25(i).

It will be appreciated that normally the expert system (Fig. 1) will include a number of rules, and the RETE network 12 will have a number of portions similar to portion 30 for the various rules. Typically, such a RETE network will have a plurality of test nodes 32(i), one test node 32(i) for each of the distinct conditions in the rules so that, if the same condition appears in multiple rules, the RETE network 12 will include only one test node 32(i) therefor. In that case, the test node 32(i) will have pointers to each of the join nodes 33 for the different rules, thereby enabling multiple rules to share test nodes 32(i). In addition, join nodes 33 may be shared among rules if the same series of preceding join nodes and test conditions are used in multiple rules. The RETE network 12 thus facilitates sharing of test nodes 32(i) and join nodes 33 among a plurality of rules, represented by terminal nodes 34.

In operation, the slave processors 11 use the pointer of the start node 31 to identify the test node list 32 containing test nodes 32(i) representing the various con ditions and test the test conditions pointed to thereby in connection with the working memory elements 13 in the working memory 14. If a working memory element 13 satisfies a test condition of a test node, the slave processor 11 generates a primitive token $Pt_n$["n" corresponding to the test node 32(i) in response to which the primitive token was generated] and deposits it in a beta memory 36(i) (generally identified by reference numeral 36) or an alpha memory 37(i) (generally identified by reference numeral 37), both of which are associated with the join node 33(i) identified by the test node 32(j) ("j"comprising an integer). If, as is the case with test node 32(1), the test condition 21 in the rule 20 is to the left (as shown in Fig. 2) of the logical connector 25 represented by join node 33, the primitive token $Pt_n$ is deposited in the beta memory 36 of the join node 33. Otherwise, as is the case with test nodes 32(2) through 32(4), if the test condition 21 is to the right (as shown in Fig. 2) of the logical connectors 25A through 25C represented by join nodes 33(1) through 33(3), respectively, the primitive tokens $Pt_n$ are deposited in the alpha memories 37 of the respective join nodes 33(1) through 33-(3).

In particular, with reference to the example shown in Fig. 2, if the slave processor 11 processing the condition identified by the test node 32(1) determines that a working memory element 13 satisfies the condition, it generates a primitive token $Pt_2$, $Pt_1$, which it loads into the beta memory 36(1) associated with the join node 33(1). The primitive token $Pt_1$ identifies the working memory element 13 that satisfied the condition. If multiple working memory elements 13 satisfy the condition, the slave processor 11 generates multiple primitive tokens for storage in the beta memory 36. Similarly, if a slave processor 11 processing the condition identified by the test node 32(2) determines that one or more working memory elements 13 satisfy the condition identified by that test node, it generates corresponding primitive tokens which it loads into the alpha memory 37(1) associated with the join node 33(1). The slave processors 11 processing the conditions identified by the remaining test nodes 32(3) and 32(4) associated with portion 30, perform similar operations, loading primitive tokens into alpha memories 37(2) and 37(3) associated with the join nodes 33-(2) and 33(3), respectively. The slave processors 11 perform similar opera tions in connection with rules defined by all of the portions of the RETE network 12.

The slave processors 11 may perform the test operations defined by the test nodes 32(i) on the working memory elements 13 in parallel. The test nodes 32(i) may be apportioned among slave processors 11 by any scheme, such as by round-robin allocation of portions 30 to the various slave processors 11, and each slave processor 11 may perform the test operations in connection with all of the working memory elements 13.

After the slave processors 11 have tested at least some of the working memory elements 13 in relation to the test nodes 32, and deposited the requisite primitive tokens $Pt_n$ in the respective memories 36 or 37 of the join nodes 33, they proceed to perform tests defined by the successive join nodes 33(1) through 33-(3) to identify sets of working memory elements 13 that satisfy each succeeding logical connection identified by the join nodes 33. As a slave processor 11 performs the test for the logical connection defined by a join node 33, it generates one or more complex tokens $Ct_n$ identifying combinations of working memory relations or elements 13 which satisfied the test. For example, a slave processor 11 processing the join node 33(1) (Fig. 2) generates complex tokens $Ct_1$, which it deposits in the beta memory 36 of the join node 33(2). Each complex token $Ct_1$ identifies a pair of working memory relations or elements 13 which jointly satisfy the logical operation defined by the logical connector 25A represented by the join node 33(1).

The slave processors 11 process the other join nodes 33(2) and 33(3) in a similar manner. In the case of join node 33(2), the slave processors 11 perform the logical operation defined by the logical connector 25B in connection with the complex tokens $Ct_1$ in the beta memory 36(2) of the join node 33(2) and the primitive tokens $Pt_3$ in its alpha memory 37(2) to generate complex tokens $Ct_2$. Each complex token $Ct_2$ identifies groups of working memory relations or elements 13, and Pt, which are jointly identified by a

6

complex token $Ct_1$ in the beta memory 36(2) of the join node 33(2), and primitive tokens $Pt_3$ in the alpha memory 37(2) of the join node 33(2), that jointly satisfy the logical operation defined by the logical connector represented by the join node 33(2). The slave processors deposit the complex tokens $Ct_2$ in the beta memory 36(3) of the join node 33(3).

Similarly, in the case of join node 33(3), the slave processors 11 perform the logical operation defined by the logical connector 25C in connection with the complex tokens $Ct_2$ in the beta memory 36(3) of the join node 33(3) and the primitive tokens $Pt_4$ in the alpha memory 37(30 of the join node 33(3) to generate complex tokens $Ct_3$. Each complex token $Ct_3$ identifies groups of working memory or relations elements 13, which are jointly identified by a complex token $Ct_2$, in the beta memory 36(3) of the join node 33(3), and primitive token $Pt_4$ in the alpha memory 37(3) of the join node 33(3), that jointly satisfy the logical operation defined by the logical connector 25 represented by the join node 33(2). The slave processors 11 deposit the complex tokens $Ct_3$ in terminal node 34.

Each complex token Ct3 in the terminal node 34 represents an instantiation of the rule represented by the terminal node 34. That is, each complex token $Ct_3$ represents a combination of working memory elements 13 that satisfies the rule. The slave processors 11 identify the terminal nodes 34 representing the rules in the expert system that have complex tokens, and perform conflict resolution operations in connection with those rules, to identify one or several instantiations to fire. In selecting an instantiation to fire, the slave processors 11 use conflict information (not shown) which may accompany the various rules in a conventional manner.

The invention provides a beta-token partitioning system, generally depicted in the figures including and following Fig. 3A, to enhance the processing of the RETE network 12 in parallel by the various slave processors 11. Beta-token partitioning in a RETE network is generally described in the aforementioned U. S. Patent Application Serial No. 103,364, filed September 30, 1987, in the name of William Barabesh and William S. Yerazunis and entitled "Method For Operating A Parallel Processing System And Related Apparatus". As described therein, in beta-token partitioning, processing of the working memory elements 13 defined by the tokens $Pt_n$ or $Ct_n$ in either the beta or alpha memories of one join node 33 in one or more of. the rules is divided among the respective slave processors 11. Thus, beta- token partitioning effectively enables the contents of either a beta or alpha memory 36 or 37 at a join node 33 to be divided among the various slave processors 11 during processing of the target expert system program defined by the RETE network In the aforementioned application, the beta-token partitioning is described as being performed on the first join node 33(1) in all of the rules, but it notes that partitioning may be performed on any join node 33.

In accordance with the invention, an expert system beta-token partitioner is provided which identifies an optimum join node 33 at which beta-token partitioning is performed. That is, the expert system beta-token partitioner may, based on application of predetermined heuristic criteria, identify, for a particular rule, a join node 33 as a candidate for beta-token partitioning, and particularly may indicate whether beta-token partitioning should be performed on the join node's beta memory 36 or its alpha memory 37. On the other band, if, upon application of the heuristic criteria, no join node 33 is identified, no beta-token partition occurs in the rule. For those rules in which no beta-token partition occurs, a rule partition operation may be performed, as described below in connection with Figs. 4A through 7, to fairly divide processing of those rules among the various slave processors 11.

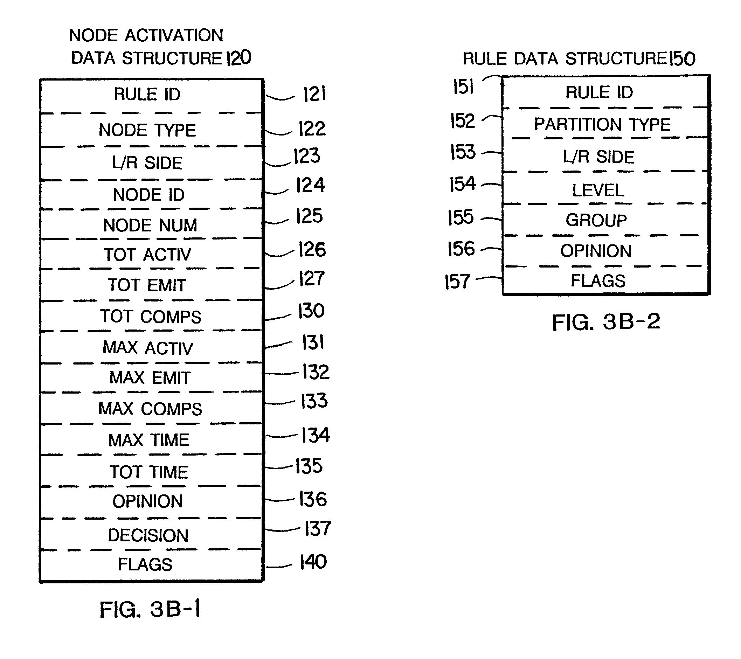

With reference to Fig. 3A, to accommodate the beta-token partitioning, the target expert system program, that is. the expert system program which is to undergo beta-token partitioning, is compiled, in a conventional manner, to run on in a digital data processing system comprising a single processor (step 100). The compiled target expert system program includes directives to facilitate collection of a number of statistics regarding processing at each node during execution of the compiled target expert system program by the single processor. The processing statistics that are collected during execution will be described below in detail particularly in connection with Fig. 3B-1. Briefly, the processing statistics include such information as the number of primitive and complex tokens $Pt_n$ and $Ct_n$ received in the beta and alpha memories of each of the join nodes 33, the number of comparisons performed in connection with processing of the join nodes 33 in generating the complex tokens $Ct_n$, the number of complex tokens $Ct_n$ emitted by each of the join nodes 33, and the amount of processor time spent at each join node 33.

After the target expert system program undergoing beta-token partitioning is compiled, it is run, on a digital data processing system including a single processor, one or more times to facilitate the collection of the processing statistics (step 101). After processing statistics have been collected, they are analyzed by the beta-token partitioning expert system, which is described below in connection with Figs. 3A through 3D-4 to locate a join node 33 which is optional, based on knowledge embedded in the expert system, for beta-token partitioning (step 102).

If the beta-token partitioning expert system determines that a rule contains no join node 33 optimal for beta-token partitioning (step 103), the rule is placed in a group to be executed on a single processor. Alternatively, the collection of rules which are not beta-partitioned may instead be rule-partitioned by a rule-partitioning system, such as described below. After the processing statistics for all of the rules have been processed in this manner, a rule partitioning operation is performed on the rules in the group for rule partitioning, that is, on all of the rules that did not contain any join nodes optimal for beta-token partitioning (step 104). After the beta-token partitioning operations have been completed in step 103, or after the rule-partition operations have been performed in step 104, the expert system program is then re-compiled for execution in a digital data processing system containing multiple processors (step 105).

Beta-Token Partitioning Expert System

The beta-token partitioning expert system will be described in connection with Figs. 3B-1 through 3D-4. Figs. 3B-1 and 3B-2 depict data structures for two types of working memory elements used by the beta-token partitioning expert system. In one specific embodiment, the processing statistics are separately maintained for each activation of a join node, that is, for each of the beta and alpha memories 36 and 37, and the beta-token partitioning expert system separately processes the statistics for the two sides as separate nodes to determine whether partitioning should occur in connection with the contents of the beta or alpha memory 36 or 37 of a rule. Fig. 3B-1 depicts the data structure of a node activation data structure 120 for each node activation. For each target expert system rule undergoing beta-token partitioning processing, the beta-token partitioning expert system generates a rule data structure 150, which is depicted in Fig. 3B-2, which effectively stores status for the target expert system rule.

Figs. 3C-1 through 3C-5 depict beta-token partitioning opinion rules that are applied to node activation data structures 120 which store processing statistics for each of the node activations to effectively generate raw partitioning scores. The raw partitioning scores are processed by beta decision rules, depicted in Figs. 3D-1 through 3D-5, to determine, in each rule, where, if anywhere, beta-token partitioning should be performed. The application of the beta decision rules results in the generation of a rule data structure 150 defining a rule for each of the target expert system rules being processed. In addition, control rules, not shown, may be provided to perform various control functions in connection with the beta-token partitioning expert system, such as eliminating node activation data structures 120 not necessary for further processing, display of results, and so forth.

With this background, and with reference to Fig. 3B-1, a node activation data structure 120, includes a plurality of fields. A rule identification field 121 contains a rule identification value that identifies the rule in the target expert system program that is undergoing beta-token partitioning. A node identification field 124 contains a node identification value which identifies the join node 33 to which each node activation data structure relates among node activation data structures 120 for the node activations for all of the join nodes 33 in the target expert system program. A node number field 125 receives a value identifying the position of the join node 33 in the sequence relative to the other join nodes of the rule identified by the contents of the rule identification field 121; the contents of the node number field effectively identifies the location of the logical connector 25 in the rule 20 (Fig. 2A) associated with the node activation data structure 120. A left/right side field 123 receives a value that associates the node activation data structure 120 with the beta memory 36 (which is situated to the left, as shown in Fig. 2) or alpha memory 37 (which is situated to the right, as shown in Fig. 2) of the node 33. Thus, the combined contents of the rule identification field 121, node number field 125 and left/right side field 123 jointly identify the node activation of the node activation data structure 120 among all node activations for the target expert system program whose processing statistics are being processed by the beta-token partitioning expert system. Otherwise stated, the three fields 121, 125 and 123 jointly identify the node activation among all node activations for the target expert system program whose processing statistics are being processed. In one embodiment, the contents of the node identification field 124 relates the join node 33 associated with the node activation data structure 120 to the particular format of the processing statistics generated during test execution of the compiled target expert system program (step 101, Fig. 3A).

The node activation data structure 120 also includes a node type field 122 which identifies the logical connector 25 associated with the join node 33 with which the data structure is associated. Several types of logical connectors 25 may be provided, including, for example, an AND connector and a NOT connector. An AND connector in a rule in the target expert system program undergoing beta-token partitioning is satisfied if the conditions 21 preceding the AND connector, as linked by their respective logical connectors 25, are

8

satisfied by the contents of the working memory 14 and if the working memory 14 contains a working memory element 13 which satisfies the condition after the AND connector 25. A NOT connector, on the other hand, is satisfied if the working memory 14 contains working memory elements 13 which satisfy the conditions, as linked by their respective connectors 25, preceding the NOT connector, but no working memory element 13 which satisfies the specific condition immediately following the connector.

The node activation data structure 120 also includes two sets of fields for receiving processing statistics. Several types of processing statistics are maintained that are separately related to each node activation, that is, that are separately related to each of the beta and alpha memories 36 and 37, including a "number of activations" value, a "number of emissions" value and a "number of comparisons" value. The "number of activations" value relates to the number of tokens, whether primitive tokens $Pt_n$ or complex tokens $Ct_n$ deposited in the beta memory 36, if the node activation data structure 120 relates to a left node activation, that is, a node activation testing a condition or conditions located to the left of a join node 33. Alternatively, if the node activation data structure 120 relates to a right node activa tion, the "number of activations" value relates to the number of primitive tokens $Pt_n$ in the alpha memory 37. The "number of emissions" value relates to the number of complex tokens $Ct_n$ that are generated and emitted while processing the join node 33, and the "number of comparisons" value relates to the number of comparisons performed during processing of the join node 33.

The node activation data structure 120 includes two sets of fields for these processing statistics. One set, comprising a total activation field 126, a total emission field 127 and a total comparisons field 130, receive processing statistics regarding total activations, emissions and comparisons performed in connection with the node activation over the entire time during which processing statistics were generated. On the other hand, a maximum activations field 131, maximum emissions field 132 and maximum comparisons field 133 receives processing statistics regarding the maximum number of activations, emissions and comparisons performed in any recognize/act cycle. The node activation data structure 120 includes a maximum time field 134, which identifies the maximum time spent during processing of the join node during a recognize/act cycle, and a total time field 135, which identifies the total amount of processing time spent by the processor in processing the join node 33.

The node activation data structure 120 further includes three fields for maintaining status information during processing of the beta-token partitioning expert system. An opinion field 136 holds a beta-token partitioning value, which is incremented or decremented as various tests, defined by the beta-token partition opinion rules (Figs. 3C-1 through 3C-5) are applied. A decision field 137 holds a decision value which indicates whether the node activation should be beta-token. partitioned; that is, the decision field indicates whether the corresponding join node 33 is optimum for beta-token partitioning along the beta or alpha memory 36 or 37 associated with the node activation data structure 120. Finally, a flags field 140 contains a plurality of flags which are used in sequencing through the various beta-token partition opinion rules (Figs. 3C-1 through 3C-5).

Fig. 3B-2 depicts the structure of a rule data structure 150 generated for each of the rules of the target expert system program by the beta-token partition expert system. With reference to Fig. 3B-2, the rule data structure 150 includes a rule identification field 151 which stores a rule identification value that identifies the rule in the target expert system program undergoing beta-token partitioning. A partition type field 152 stores partition type information that indicates whether the beta-token partition expert system has determined that a join node 33 in the rule, identified by the contents of rule identification field 151, is optimal for beta-token partitioning. If the partition type field 152 indicates that the rule includes a join node that is optimal for beta-token partitioning, a level field 154 identifies the node number of the optimal join node 33 and a left/right side field 153 indicates whether the beta-token partitioning should be in connection with the join node's beta or alpha memory 36 or 37. If the partition type field 152 indicates that the rule be beta-token partitioned, an opinion field 156 identifies an opinion value. The opinion value is copied from the opinion field 136 of the node activation data structure 120 associated with the node at which beta-token partitioning is to occur.

As described above, for those rules indicated by the beta-token partition expert system as not having join nodes 33 optimal for beta-token partitioning, a rule partitioning operation is performed. The rules are partitioned into one or more groups to accommodate maximal concurrent processing. A group field 155 is provided in the rule data structure 150 for the rules on which rule partitioning is performed.It identifies a rule partition group to which the rule is assigned during rule partitioning. Finally, the rule data structure 150 includes a flags field that contain various control flags as described below.

As noted above, the beta-token partitioning expert system includes three types of rules, including the beta-token partitioning opinion rules depicted in Figs. 3C- 1 through 3C-5, the beta decision rules depicted in Figs. 3D-1 through 3D-5, and the control rules (not shown) that enable selected input/output and control operations, a complete description of which is not necessary to the understanding of the invention or the embodiment described herein.

To control use of the beta-token partitioning opinion rules, beta decision rules and control rules, the beta-token partitioning expert system includes several working memory elements defining contexts. One such working memory element is a BETA_HEURISTICS context, which, if it contains the value ACTIVE, enables use of the beta-token partitioning opinion rules. Otherwise stated, each of the beta-token partitioning opinion rules includes a condition that the BETA_HEURISTICS working memory element contain the value ACTIVE; if the BETA_HEURISTICS working memory element does not contain the value ACTIVE, the beta-token partitioning opinion rules can not fire. The beta-token partitioning expert system also includes a working memory element comprising a MAKE_BETA_DECISIONS context, which, if it contains the value ACTIVE, permits the beta decision rules to fire. Other working memory elements define other contexts used by the control rules.

With this background, and with reference to Fig. 3C-1 through 3C-5, the beta-token partitioning expert system includes thirteen beta-token partitioning opinion rules, identified as rules H1 through H13, each of which modifies the value of the contents of the opinion field 136 in response to the results of various tests, each defined by one of the beta-token partitioning opinion rules. The node activation data structure 120 for each node activation includes control flags, maintained in field 140 (Fig. 3A), to ensure that the rules fire only once for each node activation data structure 120.

With reference to Fig. 3C-1, rule H1 is used to provide that beta-token partition does not occur in connection with node activations for join nodes that are of type NOT. More specifically, if a node activation, identified in Figs. 3C-1 through 3C-5 as "<THE_NODE>" of a join node 33 in a specific rule "RULE_ID=<PR>", has a node activation data structure 120 whose node type field 122 contains a value NOT, and the flags field 140 contains an empty T1 flag, indicating that rule H1 has not been applied, the conditions of the rule H1, which are set forth in the portion of the rule following "IF", the rule fires. In that case, the operations defined in the portion of the rule following "THEN" are performed. In that case, the opinion field 136 of the node activation data structure 120 of the node activation "<THE_NODE>" is loaded with a large negative value, in one embodiment a value "-1000". This value is selected to ensure that application of the beta decision rules will not select the node as optimum for beta-token partitioning, even if application of other rules may modify this value. The firing also results in setting of the flag T1 in the flags field 140 of the node activation's node activation data structure 120; since the rule's con ditions require that the flag T1 must be clear for the rule to fire, the setting of the T1 flag ensures that the rule is applied at most once to a node activation.

Rule H2 is provided to mildly reduce the likelihood of beta-token partitioning in connection with left node activations that relate to the first join node 33(1) in the sequence of join nodes associated with a rule 20 in the expert system program, that is, those node activations associated with node activation data structures 120 having value "1" in their node number fields 125 and value "L" in their left/right side fields 123. A flag T9, maintained in flags field 140 of each node activation data structure 120, controls firing of rule H2. If the contents of the node activation data structure 120 for the node activation "<THE_NODE>" causes the rule H2 to fire, the contents of the opinion field 136 are decremented by value "1". In addition, the flag T9 is set in the node activation data structure 120 so that the node activation data structure 120 does not cause the rule H2 to fire again.

Rule H3 relates to a comparison between left and right node activations for a single node in a single rule of the target expert system program undergoing beta-token partitioning. Rule H3 is provided to increase the likelihood of beta-token partitioning of a node activation, identified by "<THE_NODE>", if the number of comparison operations performed in connection with the opposite side node activation of the join node 33 during the generation of processing statistics is above a threshold value. The threshold value, identified in the rule H3 as a parameter PARAM<GOOD_MAX_COMPS>, in one embodiment is computed as ten times the number of processors for which the target expert system program is to be compiled for execution. Rule H3 fires for two node activations represented by node activation data structures 120 if the maximum comparisons field 136 associated with the opposite side node activation has a value greater than PARAM<GOOD_MAX_COMPS> and if their rule identification fields 121 contain the same values, node number fields 125 contain the same values, and left/right side fields 123 contain opposing (that is, "LEFT" versus "RIGHT") values. These three conditions ensure that two node activation data structures 120 are related to opposing node activations for the same rule 20 (as identified by the contents of the rule identification fields 121) and join node 33 (as identified by the contents of the node number fields l125). In addition, the node activation "<THE_NODE>" must have a node type of AND and a clear flag T2 for the beta-token partitioning opinion rule H3 to fire. If the beta-token partitioning opinion rule H3 fires, the contents of the opinion field 136 of the node activation data structure 120 of the node activation "<THE_NODE>" are incremented by seven, and the flag T2 is set so that the rule does not fire in connection with that node activation data structure 120 again.

Rule H4 is provided to test the contents of the maximum comparisons field 136 of a node activation whose left/right side field contains the value "RIGHT" to determine whether they exceed the parameter PARAM<GOOD_MAX_COMPS> and to increase the value of the contents of the opinion field 136 of the parent node activation (which is defined below) having the larger value in its maximum comparisons field 133. With reference to Fig. 3C-2, the rule H4 contains three conditions, each relating to a node activation represented by a node activation data structure 120.

The first condition of beta-token partitioning opinion rule H4 is the existence of a node activation "<THE_NODE>" having a node activation data structure 120 whose left/right side field contains the value "RIGHT", indicating that the node activation is a right side activation, whose node type field 122 contains the value AND, whose maximum comparisons field contains a value greater than PARAM<GOOD_MAX_COMPS>, and whose flags field 140 contains a clear flag T8.

The second and third conditions of beta-token partition opinion rule H4 are the existence of parent node activations, that is, the existence of node activation data structures 120 whose rule identification fields 121 contain values that identify the same target expert system program rule as that identified by the node activation data structure of the node activation "<THE_NODE>" and whose node number fields 125 contain values one less than the contents of the node number field 125 of the node activation data structure 120 of the node activation "<THE_NODE>". If all three conditions of beta-token partition opinion rule H4 are satisfied, the rule fires thereby increasing by a value "five" the contents of the opinion field 136 of the node activation data structure 120 of the parent node activation whose maximum comparisons field 133 contains the higher value are increased. In addition, flag T8 is set in flags field 140 of the node activation data structure 120 dated with the node activation "<THE_NODE>" to ensure that the rule does not fire again with the same set of node activation data structures 120.

The remaining beta-token partitioning opinion rules H5 through H13 are depicted in Figs. 3C-3 through 3C-5 and will not be described in detail. Briefly, however, beta-token partition opinion rule H5 is provided to enable the decrement of the contents of the opinion field 136 of a node activation data structure 120 of a node activation "<THE_NODE>" if the contents of the maximum comparisons field is below a particular value, identified by parameter PARAM<BAD_MAX_COMPS>. In one particular embodiment, the parameter PARAM<BAD_MAX_COMPS> is computed to be three times the number of processors for which the target expert system program is to be compiled for execution, and firing of Rule H5 results in the contents of the opinion field 136 being decremented by a value of "four". Flag T3 in the flags field 140 of the node activation data structures 120 of the various node activations controls the application of the beta-token partition opinion rule H5.

Beta-token partitioning opinion rule H6 is provided to enable the increase of the contents of the opinion field 136 of the node activation data structure 120 of a node activation "<THE_NODE>" for a join node 33 if the node type field 122 of the node activation data structure 120 contains the value "AND" and if the contents of the maximum emissions field 132 are above a particular value, identified by a parameter PARAM<(GOOD_MAX_EMITS>. In one particular embodiment, the parameter PARAM<GOOD_MAX_EMITS> is computed to be four times the number of processors for which the target expert system program is to be compiled for execution, and firing of Rule H6 results in contents of the opinion field 136 being incremented by a value of "five". Flag T4 in the flags field 140 of the node activation data structures 120 of the various node activations controls the application of the beta-token partitioning opinion rule H6.

Beta-token partitioning opinion rule H7 is provided to enable the increase of the contents of the opinion fields 136 of the node activation data structures 120 of a left node activation "<THE_NODE>", and of its parent node activations, if the contents of the maximum activations field 131 of the node activation data structure 120 of the node activation "<THE_NODE>" are above a particular value, identified by a parameter PARAM<GOOD_MAX_ACTIV>. In one particular embodiment, the parameter PARAM<GOOD_MAX_ACTIV> is computed to be five times the number of processors for which the target expert system program is to be compiled for execution, and firing of Rule H7 results in the contents of the opinion field 136 of the node activation data sturcture 120 of the left node activation "<THE_NODE>" being incremented by a value "three" and the contents of the opinion fields 136 of its parent node activations being incremented by a value of "two". Flag T5 in the flags field 140 of the node activation data structures 120 of the various node activations controls the application of the beta-token partition opinion rule H7.

Beta-token partitioning opinion rule H8 (Fig. 3C-4) enables the increase of the contents of the opinion field 136 of the node activation data structure 120 of a right node activation if the node type field 122 contains the value "AND", and the maximum activations field 131 of its node activation data structure 120 contains a value greater than the parameter PARAM<GOOD__MAX__ACTIV>. In the embodiment described herein, in which the parameter PARAM<GOOD__MAX__ACTIV> is computed as described above, the firing of Rule H8 results in the contents of the opinion field 136 being incremented by a value of "four". Flag T5 in flags field 140 of the node activation data structures 120 of the various node activations controls the application of beta-token partitioning opinion rule H8.

Beta-token partitioning opinion rule H9 is provided to enable the increase of the contents of the opinion field 136 of the node activation data structure 120 of a node activation "<THE__NODE>" if the node type field 122 has a value AND, and the contents of the total emissions field 127 are above a particular value, identified by a parameter PARAM(GOOD__TOT__EMIT>. In one particular embodiment, the parameter PARAM<GOOD__TOT__EMI→> )is computed to be ten times the number of recognize/act cycles covered by the processing statistics used in formation of the node activation data structures 120 for the node activations, and the firing of Rule H9 results in the contents of the opinion field 136 being incremented by a value of "two". Flag T6 in the flags field 140 of the node activation data structures 120 of the various node activations controls the application of the beta-token partitioning opinion rule H9.

Beta-token partitioning opinion rule H10 is provided to enable an increase of the contents of the opinion field 136 of the node activation data structure 120 of a node activation"<THE__NODE>" if the node type field 122 has a value "AND" and the contents of the total comparisons field 130 of the node activation data structure 120 of its sibling node activation, that is, the opposite side node activation relating to the same join node 33 (Fig. 2), has a value greater than a parameter PARAM<GOOD__TOT__COMPS>. In one particular embodiment, the parameter PARAM<GOOD__TOT__COMPS> has a value corresponding to one hundred times the number of recognize/act cycles covered by the processing statistics used in formation of the node activation data structure 120 for the node activations, and the firing of Rule H10 results in the contents of the opinion field 136 being incremented by a value of "four". Flag T7 in the flags field 140 of the node activation data structures 120 of the various node activations controls the application of the beta-token partitioning opinion rule H10.

Beta-token partitioning opinion rule H11 (Fig. 3C-5) is provided to enable a moderate increase of the contents of the opinion field 136 of the node activation data structure 120 of a node activation "<THE__NODE>" if the node type field 122 has a value "AND" and the contents of the maximum time field 134 of the same node activation data structure 120 have a value larger than the parameter PARA<GOOD__MAX__TIME>. In one particular embodiment, the parameter PARAM<GOOD__MAX__TIME> has a value corresponding to one hundred times the number of processors for which the target expert system program is to be compiled for execution, and the firing of Rule H11 results in the contents of the opinion field 136 being incremented by a value of "four". Flag T11 of the flags field 140 of the node activation data structures 120 of the various node activations controls the application of the beta-token partition opinion rule H11.

Beta-token partitioning opinion rule H12 is provided to enable a moderate increase in the contents of the opinion field 136 of the node activation data structure 120 of a node activation "<THE__NODE>" if the node type field 122 has a value "AND" and the contents of the total time field 135 of the same node activation data structure 120 have a value larger than the parameter PARAM<GOOD__TOT__TIME>. In one particular embodiment, the parameter PARAM<GOOD__TOT__TIME> has a value corresponding to one hundred times the number of recognize/act cycles covered by the processing statistics used in formation of the node activation data structure 120 for the node activations, and firing of Rule H12 results in the contents of the opinion field 136 being incremented by a value of "three". Flag T12 of the flags field 140 of the node activation data structures 120 of the various node activations controls the application of the beta-token partitioning opinion rule H 12.

Finally, beta-token partitioning opinion rule H13 is provided to enable a small decrease in the contents of the opinion field 136 of the node activation data structure 120 of a node activation "<THE__NODE>" if the node type field 122 has the value "AND" and the contents of the total activation field 126 of the node activation data structure 120 have a value much larger than the value of the contents of the total emissions field 127 of the same node activation data structure 120. In one particular embodiment, the beta-token partition opinion rule H13 fires if the value in the total activation field 126 is greater than ten times the value in the total emissions field 127, and firing of Rule H13 results in the contents of the opinion field 136 being incremented by a value of "one". Flag T13 of the flags field 140 of the node activation data structures 120 of the various node activations controls the application of the beta-token partition opinion rule H13.

The six beta decision rules D1 through D6 are depicted in Figs. 3D-1 through 3D-4. The beta decision rules are applied to the node activation data structures 120 for each rule 20 in the target expert system program and enable the comparisons of beta opinion values in the opinion fields 136 of various node activation data structures 120 of the node activations for each rule, both with each other and with selected

12

threshold values. Generally, the beta decision rules determine that beta-token partitioning should not occur in connection with either:

(a) a node activation of a join node 33(i) whose node activation data structure 120 has an opinion field 136 that contains a beta opinion value that is less than a predetermined threshold value established by a parameter PARAM<GOOD_BETA_CONST>, or

(b) if a node activation of a join node 33(i) whose node activation data structure 120 has an opinion field 136 that contains a beta opinion value that is greater than or equal to a predetermined threshold value established by a parameter PARAM<GOOD_BETA_CONST>, but the beta opinion value is less than or equal to the beta opinion value for a node activation of the next succeeding join node 33(i+1) less a difference parameter value PARAM<GOOD_BETA_DELTA>. Otherwise stated, the beta decision rules determine that beta-token partitioning should not occur for a node activation whose associated beta opinion value is less than a minimum threshold value, or for a node activation which has an associated beta opinion value that is larger than, or equal to the minimum threshold value but for which a node activation of the next join node has an associated beta opinion value that is greater than or equal to that for the node activation being tested by at least a second "delta" value.

Among the other node activations, the beta decision rules depicted on Figs. 3D-1 through 3D-4 enable the identification of a node activation in the first of the successive join nodes 33 for a rule 25 that is optimum for beta-token partitioning. When that occurs, a rule data structure 150 is created for the expert system program rule as explained below.

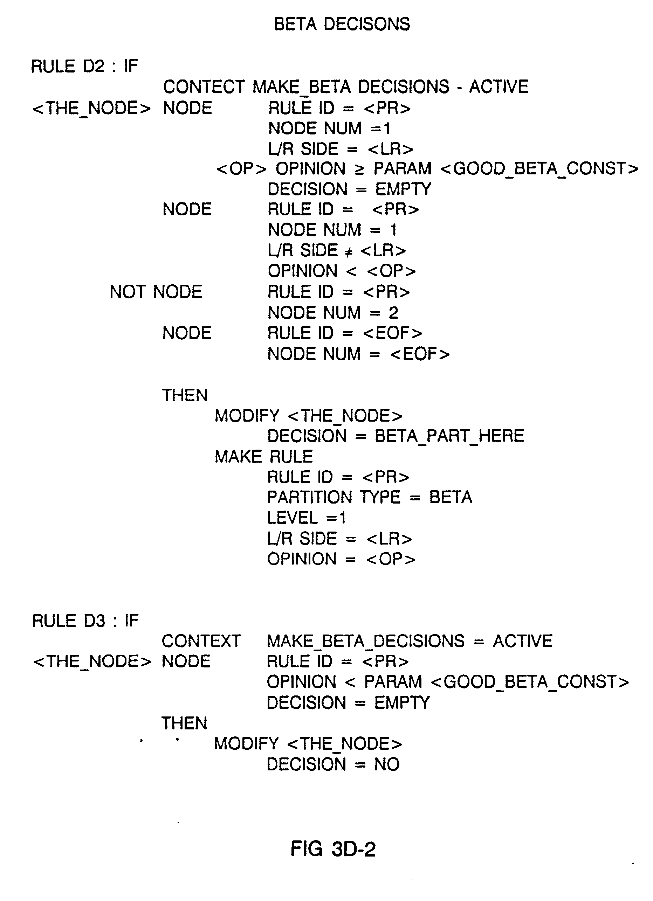

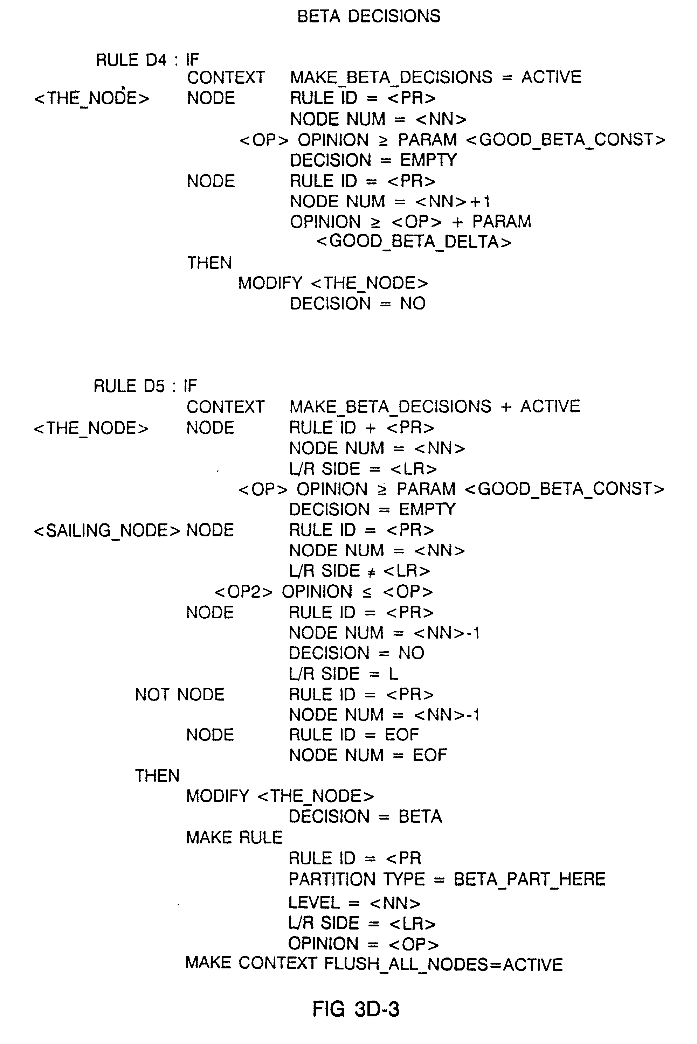

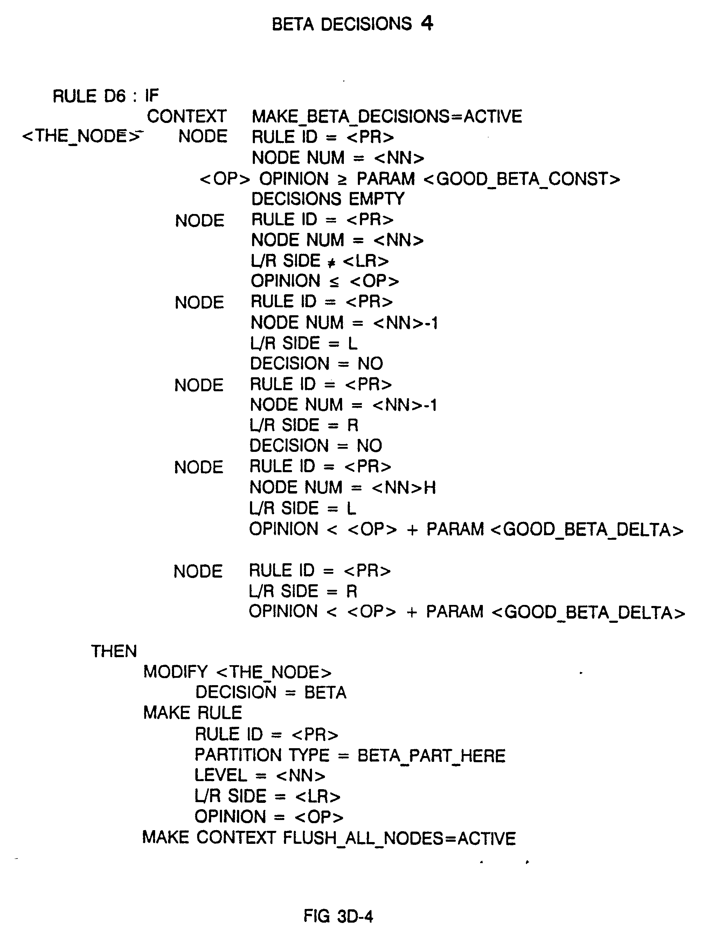

The beta decision rules D1 through D6 are depicted in the Figs. and each will only be briefly described here. With reference to Fig. 3D-1, beta decision rule D1 enables the comparison of the contents of the opinion fields 136 of the node activation data structures 120 of the node activations of the first and second join nodes 33 of an expert system program rule. If (1) the higher of the first level opinion values, that is, the higher of the values contained in the opinion field 136 of the node activation data structures 120 of left and right node activations of the first join node 33 is greater than or equal to a selected value, namely, a parameter PARAM<GOOD_BETA_CONST>, and (2) the values of the opinion fields 136 of the node activation data structures 120 of the left and right node activations of the second join node exceed the higher first level opinion value by less than a second value, identified by a parameter PARAM<GOOD_BETA_DELTA>, then the beta decision rule D1 fires. In one embodiment, the values of the parameters PARAM<GOOD_BETA_CONST> and PARAM<GOOD_BETA_DELTA> are supplied by the operator. In one specific embodiment, the parameter PARAM<GOOD_BETA_CONST> has a default value of "six" and the parameter PARAM<GOOD_BETA_DELTA> has a default value of "four".

If the beta decision rule D1 fires, the node activation of the first level join node 33 having the higher first level opinion value is deemed optimum for beta-token partitioning. The firing of the beta decision rule D1 results in loading of a number of additional values into the other fields of the rule data structure 150. In particular, a value BETA_PART_HERE is loaded into the decision field 137 of the node activation data structure 120 for that node activation to so indicate. In addition, a rule data structure 150 for a rule is created and the rule identification field 151 is loaded with a value to identify the target expert system program rule, taken from field 121 of the node activation data structure 120 of the node activation. A value "BETA" is loaded into the partition type field 152 to indicate that beta-token partitioning is to occur at that node activation. A value "1" is loaded into the level field 154, to indicate that the beta-token partition is to occur at the first join node 33 associated with the rule 25. The contents of the left/right side field 123 of the node activation data structure 120 for the node activation are copied into the left/right side field 153 of the newly-created rule data structure 150, to further identify the node activation at which beta-token partitioning is to occur. In addition, the contents of the opinion field 136 of the node activation data structure 120 for the node activation are copied into the opinion field 156 of the newly-created rule data structure 150.

Beta decision rule D2 (Fig. 3D-2) enables the comparison of the contents of the opinion fields 136 of the node activation data structures 120 of the left and right side node activations at the first join node 33 of a rule 20, and fires if (1) the value of the higher is greater than or equal to the value of parameter PARAM<GOOD_BETA_CONST>, and (2) there are no node activation data structures 120 of node activations of a second join node 33, which occurs if the expert system program rule does not contain any second join nodes 33. The firing of the beta decision rule D2 results in the same operations as does firing of beta decision rule D1.

Beta decision rule D3 enables the comparison of the contents of the opinion fields 136 of a node activation data structure 120 with the parameter PARAM<GOOD_BETA_CONST> and fires if the contents of the opinion fields 136 are lower than the value of the parameter. The firing of the beta decision rule D3 results in the loading of a decision value "NO" in the decision field 137 of the node activation data structures 120. Thus, if the value in the opinion field 136 of the node activation data structure 120 of any node activation is lower than the value of the parameter PARAM<GOOD__BETA__CONST>, beta-token partitioning does not occur at that node activation.

Beta decision rule D4 (Fig. 3D-3) enables a comparison between the contents of the opinion fields 136 of node activation data structures 120 for node activations for two succeeding join nodes 33. Beta-token partition rule D4 fires if the contents of the opinion field 136 of the node activation data structure 120 for the node activation of the first join node 33(i) equals or exceeds the value of the parameter PARAM<GOOD__BETA__CONST>, and if the contents of that for the second join node 33(i+1) exceeds that value by the value of the parameter PARAM<GOOD__BETA__DELTA>. The firing of the beta decision rule D4 results in the loading of a decision value "NO" in the decision field 137 of the node activation data structure 120 of the node activation of the first join node 33(i). The effect of the beta decision rule D4 is that, if the beta opinion value of a node activation of one join node 33(i) indicates that it is a candidate for beta-token partitioning, but the beta opinion value of either node activation of the next succeeding join node 33(i+1) indicates that it is a better candidate, by at least the value of the parameter PARAM<GOOD__BETA__DELTA>, then beta-token partitioning should not occur at the node activation for the one join node 33(i).

Beta decision rule D5 enables a comparison of the beta opinion values in the opinion fields 136 of node activation data structures 120 of node activations for the same join node 33(i), if the beta decision value "NO" is contained in the decision fields 137 of the node activation data structures 120 of node activations for the preceding join node 33(i-1) and there are no succeeding join nodes 33(i+1). If the larger of the beta opinion values is greater than or equal to the value of the parameter PARAM<GOOD__BETA__CONST>, the beta decision rule D5 fires, and the operations describe above in connection with beta decision rule D1 are performed.

Beta decision rule D6 (Fig. 3D-4) is essentially directed to node activations between the first several join nodes 33 in an expert system program rule 25, which are covered by beta decision rules D1 and D2, and the last join node 33 in a target expert system program rule 25, which is covered by beta decision rule D5. The beta decision rule D6 enables the testing of conditions relating to (1) the contents of the decision fields 137 of the node activation data structures 120 of the node activations of preceding join nodes 33(i-1) to determine if they both contain the value "NO", indicating that they are not optimum for beta-token partitioning, (2) the beta opinion values contained in the opinion fields 136 of the node activation data structures 120 of the node activations of the join nodes 33(i) to determine if the larger beta opinion value is greater than or equal to the value of parameter PARAM<GOOD__BETA__CONST>, and (3) beta opinion values contained in the opinion fields 136 of the node activation data structures 120 of the node activations of the succeeding join nodes 33(i+1) to determine if they are both less than the sum of (a) the larger of the beta opinion values for the node activations of the join nodes 33(i) and (b) the value of parameter PARAM<GOOD__BETA__DELTA>. If the beta decision rule D6 fires, the operations described above in connection with beta decision rule D1 are performed in connection with the node activation data structure 120 of the node activation of the join node 33(i) which has the higher beta opinion value.

It will be appreciated by those skilled in the art that, while the beta-token partitioning expert system has been described as comprising a plurality of production rules as elements for generating beta partitioning opinion values and beta partitioning decision values, the beta partitioning expert system may also be implemented in a functional or procedural manner using functional or procedural routines as elements for providing such values. Further, in the beta-token partitioning expert system comprising a plurality of production rules, the node activation data structures 120 and rule data structures 150 may comprise working memory elements in the formats used by the beta-partitioning opinion rules H1 through H13 and the beta decision rules D1 through D6.

## Rule Partitioning System

For purposes of rule partitioning, the step of compiling the target expert system program to run on a single processor (see Step 100 in Fig. 3A) generates a RETE network in which join nodes 33 (Fig. 2) may be shared among multiple rules. The principle of node sharing will be explained with the aid of Figs. 4A and 4B, which show, in schematic form, portions 108 of the RETE network corresponding to the nodes for the left hand sides of three rules defined as follows:

Rule A: $(TC_1)AND(TC_2)AND(TC_3)AND(TC_4)AND(TC_5)AND(TC_6)$

Rule B: $(TC_1)AND(TC_2)AND(TC_3)AND(TC_7)AND(TC_8)$

Rule C: $(TC_1)AND(TC_2)AND(TC_3)AND(TC_4)AND(TC_9)$ where $TC_i$, $1 \leq i \leq 9$, represent test conditions (corresponding to conditions 21 of Fig. 2) and the AND's represent a logical connectors (corresponding to logical connectors 25 also of Fig. 2). In Figs. 4A and 4B, the test conditions are represented as test nodes 110 (corresponding to test nodes 32 of Fig. 2) and the logical connectors are represented as join nodes 112 (corresponding to join nodes 33 in Fig. 2). Note that Rules A and B have identical strings of test conditions and logical connectors up to and including test condition $TC_3$ and its corresponding join node 112 (i.e., the join node 112 to which test node 110 labelled $TC_3$ is connected) and Rules A and C have identical strings of test conditions and logical connectors up to and including test condition $TC_4$ and its corresponding join node 112 (i.e., the join node 112 to which test node 110 labelled $TC_4$ is connected). In accordance with node sharing, the compiler enables the generation of only one data structure corresponding to a sets of test nodes 110 and join nodes 112 shared by multiple rules. Then, as depicted in Fig. 4B, the complex tokens which issue in response to processing of that data structure are used for all of the rules that share the nodes in a set. For example, the data structure for the segment of Rule A corresponding to test conditions $TC_1$ through $TC_3$ appears only once in the compiled RETE network and during processing, complex tokens $CT_1$ are generated for Rule A as well as Rule B, both of which share those nodes.

During the compilation step, the processor performing the compilation operation identifies the nodes which are candidates for node sharing as follows. Taking one rule at a time, the processor processes each rule to generate a corresponding data structure 108. After a data structure 108 has been generated for a rule and before the data structure for the next rule is generated, the processor identifies the longest sequence of nodes 112 within that data structure 108 that may be shared with at least one of the other rules that have been compiled thus far. The identification of the longest shared node sequence proceeds in stages. In the first stage, the processor identifies all other rules among the rules compiled thus far which have a first test node that is identical to a corresponding test node of the rule being processed. Then, among the identified rules, the processor identifies all previously compiled rules which have a second test node and an associated join node (i.e., the test node 110 that is connected to join node 112) that are identical to the corresponding nodes of the rule being processed. This is repeated down through the test nodes 110 and join nodes 112 which make up data structure 108 of the rule being processed, one level at a time, until a level is reached, at which the processor can find no rules which have test nodes 110 or join nodes 112 that are identical to those of the rule being processed. The sequence of join nodes 112 (and associated test nodes 108) down to the immediately prior level represents the longest sequence of shared nodes for the rule being processed. This series of operations is repeated for each data structure for each rule.

Also, during the compilation step, a mapping that identifies the join nodes 112 corresponding to each particular rule of all the rules to be rule partitioned is generated and stored in a lookaside table 160, such as the one illustrated in Fig. 5. Only the rules deemed unsuitable for beta partitioning (see step 102 of Fig. 3A) are included in the group of rules to be rule partitioned. Lookaside table 160 includes a sufficient number of blocks 162 to represent all of the rules in the target expert system program that are being rule partitioned. Each block 162 includes a rule identifier field 164, a mapping field 166, a total time field 168 and a partition identifier field 170. Each rule for which a mapping is generated is identified in rule identifier field 164 and a list identifying the join nodes which make up that rule is stored in the mapping field 166.

In the described embodiment, the processor accomplishes this mapping by first grouping join nodes 112 into what shall be referred to as $\mu$-blocks 114 and then mapping the $\mu$-blocks to the rules (that is, identifying, for each rule its component $\mu$-blocks) in lookaside table 160. Each $\mu$-block 114 is the longest sequence of connected join nodes 112 that can be constructed without violating the rule that all nodes of any given $\mu$-block 114 must be shared by all members of a set of rules. Thus, in Fig. 4B for example, join nodes 112 numbered 1 and 2 are members of the same $\mu$-block 114, namely, $\mu_1$, because they are part of a sequence and they are each shared by all members of a set of rules, namely, Rules A, B and C. Join node 112 numbered 3, however, cannot be a member of $\mu_1$ because it is not shared by the same set of rules (it is shared only by Rules A and C). All join nodes 112 are assigned to a corresponding numbered $\mu$-block 114 in accordance with these criteria. Fig. 4B depicts a set of $\mu$-blocks 114, namely, $\mu_1$ through $\mu_5$, which are constructed in accordance with such rules.

The mapping of join nodes 112 to the corresponding $\mu$-blocks 114 is retained for subsequent computations which take place during the running of the compiled target program on the single processor. As shall become more apparent, grouping join nodes 112 into $\mu$-blocks 114 reduces the amount of computations required to perform the rule partitioning in accordance with the invention.

When the target program is executed on the single processor, an execution trace of the program is generated and for each recognize-act cycle of the target program an effect set, $e_i$ is generated and stored in an effect set array 172, which organized as illustrated in Fig. 6. Each effect set can be expressed in the following form:

$e_i = ((\mu_1, t_{i1})(\mu_2, t_{i2})...(\mu_m, t_{im}))$,

where

$e_i$ is the effect set for the $i^{th}$ recognize-act cycle;

i is an integer index identifying a recognize-act cycle and which ranges from 1 to P, where P equals the number of recognize-act cycles in the execution sequence;

$\mu_j$ identifies the $j^{th}$ $\mu$-block;

$t_{ij}$ is a measure of the time the program spent in processing the $j^{th}$ $\mu$-block during the $i^{th}$ cycle; and

m is the total number of $\mu$-blocks used to describe the network.

Each entry 174 (namely, $t_{ij}$) of array 172 is indexed by the recognize-act cycle (i) and the $\mu$-block 114 ($\mu_j$) to which it corresponds. After the target program has been executed, effect set array 172 contains data for each of P cycles of the execution run.

After effect set data for all of the relevant cycles has been computed and stored in array 172, a measure of the total time spent (represented in Fig. 6 as $S_j$, $1 \leq j \leq m$) in processing each $\mu$-block 114 for all cycles of the program is computed and is then also stored in array 172. In other words, $S_j = \Sigma_i t_{ij}$.

In one embodiment, the measure of the time spent in processing each $\mu$-block 114 during a recognize-act cycle, namely, $t_{ij}$, is estimated by computing for that cycle the total number of activations for all of the join nodes which make up the relevant $\mu$-block. The activation counts required for that computation are available from the node activation data structures 120, (Fig. 3B-1) corresponding to alpha and beta memories 36 and 37 of the relevant join nodes 33 (See Fig. 2). In particular, the per cycle (as well as total) activation counts are derived from the data stored in total activation fields 126 and maximum activations fields 131 of the node activation data structures 120 for the mode activation of the relevant join nodes 33.

Alternatively, a hardware clock may be queried upon each token's entry and completion in a node, the elapsed processing time between entry and exit and completion in a node being accumulated for each recognize-act cycle. In that case, the actual per-cycle elapsed times may be stored in array 172 directly.

After the $S_j$'s are computed for all of $\mu$-blocks 1 14, the processor computes the total time spent in each rule for all of the cycles of the program and stores this in the appropriate total time field 168 in lookaside table 160. The total time for a rule, $T_{rule}$, is the sum of the total times for the $\mu$-blocks 114 which make up the rule. For example, as shown in Fig. 5, Rule A consists of three $\mu$-blocks 114, namely, $\mu_1$, $\mu_2$, and $\mu_3$; thus, $T_A = S_1 + S_2 + S_3$.

The statistics stored in tables 160 and 172 are subsequently used by a rule partition system (referred to hereinafter as the RP system) to distribute the processing of the rules among the processors of a multiprocessor system by assigning different rules to different processors (see step 104 of Fig. 3A). As shown in Figs. 7A and 7B, the RP system initially rearranges the order of the rules listed in lookaside table 160 so that they are in descending order according to $T_{rule}$, that is, the total time spent on processing each rule, with the most time consuming rule (i.e., the rule associated with the block 162 having the highest value in its total time field 168) being listed first in table 160 (step 200). Then, the RP system generates a group of empty partition sets, $\Pi_n$, $1 \leq n \leq N$, where N is specified by an operator and equals the number of central processing units (CPU's) in the multiprocessor system for which the target expert system program is being rule partitioned (step 210).

Briefly, after the partition sets have been generated, the RP system, for each of the target expert system rules identified in table 160, iteratively performs a series of operations to determine a partition to which the rule should be permanently assigned. During each iteration, the RP system selects a rule and temporarily assigns it to a partition and determines processing times for all of the partitions.

That is, for the partition to which the selected rule has been temporarily assigned, the RP system determines a partition processing time, which relates to the time required to process all rules, if any, which have previously been permanently assigned to the partition, as described below, as well as the rule which is temporarily assigned to the partition. In addition, for each of the partitions to which the rule has not been temporarily assigned, the RP system also determines a partition processing time, which relates to the total time required to process all rules which have previously been permanently assigned to those partitions. The RP system then determines the largest of the partition processing times, which corresponds to the time required to process the target expert system rules assuming the selected rule has been assigned to the one partition (that is, the particular partition to which it was temporarily assigned) as described above. If the RP system has processing times for multiple processing cycles, it does these operations separately for each of the cycles to determine the largest partition processing time over all of the processing cycles.

The RP system iteratively performs these operations to determine the total processing time for each temporary assignment of the selected rule to each partition. Thereafter, it determines the partition having the lowest total processing time, and permanently assigns the rule to that partition. The RP system repeats these iterative operations for each rule identified in table 160, until all of the rules have been assigned to

16

partitions. By these operations, the RP system can determine the assignments of the rules to the various partitions to provide near optimum total processing time for all the rules in the target expert system program that are to undergo rule partitioning.

More specifically, the RP system initially selects the most time consuming rule among the unassigned rules listed in lookaside table 160 (i.e., the rule with the largest $T_{rule}$) (step 220). During processing, the RP system iteratively selects the rules in the order they are listed in the table. After selecting a rule, the RP system initializes an index, k, by setting it equal to one (step 230). The index is used to identify the particular partition $\Pi_k$ to which the rule is being assigned, and also to determine when the rule has been assigned to all partitions at which point iterations for that rule stop. Next, after initializing the index k, the RP system temporarily assigns the selected rule to partition $\Pi_k$ i.e. the partition identified by the index k (step 240). Based upon this temporary assignment, the RP system computes, for each partition and for each cycle of the program, the time, as determined from array 172, for processing the rules (including the temporarily-assigned rule as well as rules, if any, which were previously permanently assigned to the partition) assigned to the respective partitions (step 250). These process times are derived from the information stored in lookaside table 160, which identifies the $\mu$-blocks assigned to each rule of the target expert system program, and effect data array 172, which lists the time to process each $\mu$-block for each cycle of the target expert system program.

For example, assuming there are two CPU's (and, thus, two partitions, namely $\Pi_1$, and $\Pi_2$) and assuming Rule A is the most time consuming rule (i.e., the rule taking the longest processing time and thus is the first rule to be selected), during the first iteration Rule A is temporarily assigned to partition $\Pi_1$. Since Rule A includes $\mu$-blocks, $\mu_1$, $\mu_2$ and $\mu_3$, and the recorded time for each $\mu$-block is $t_{ij}$ in array 172, the computed process times associated with each partition and for each of three cycles for which it has processing times (given the temporary assignment of Rule A to partition $\Pi_1$) are as follows:

| cycle | $\pi_1$ | $\pi_2$ |
|---|---|---|
| 1 | $t_{11} + t_{12} + t_{13}$ | 0 |
| 2 | $t_{21} + t_{22} + t_{23}$ | 0 |
| 3 | $t_{31} + t_{32} + t_{33}$ | 0 |

Since all CPU's must complete processing of rules in its partition during one cycle before any CPU can begin processing the rules for the next cycle, the partition with the maximum processing time for a given cycle establishes the minimum processing time required for all of the CPU's during that cycle. Otherwise stated, the maximum processing time for all CPU's to process their assigned rules during a cycle corresponds to the minimum processing time over that cycle. For notational purposes, in the following description, for a temporary assignment of Rule X to a partition $\Pi_k$, the minimum amount of time required for a processor to process a cycle i will be designated as $MT_i(x \rightarrow k)$. In step 260, the RP system determines the value for $MT_i(x \rightarrow k)$ for each cycle by identifying the maximum processing time among all of the computed partition processing times for that cycle. Thus since the processing times for partition $\Pi_2$ are all zeros, the minimum processing time for each cycle is determined by the processing times for partition $\Pi_1$; that is:

$$MT_1(A \rightarrow 1) = t_{11} + t_{12} + t_{13}$$
$$MT_2(A \rightarrow 1) = t_{21} + t_{22} + t_{23}$$
$$MT_3(A \rightarrow 1) = t_{31} + t_{32} + t_{33}$$

Next, the RP system computes a total program processing time for the temporary assignment of rule x to partition $\Pi_k$, which is designated as $TOT(x \rightarrow k)$, by summing the minimum cycle processing times over all of the cycles (step 270). That is,

$$TOT(x \rightarrow k) = \Sigma_i MT_i(x \rightarrow k).$$

Thus, if there are only three cycles, then:

$$TOT(A \rightarrow 1) = t_{11} + t_{12} + t_{13} + t_{21} + t_{22} + t_{23} + t_{31} + t_{32} + t_{33}$$

The resulting value for $TOT(x \rightarrow k)$ is temporarily stored until a permanent assignment for the selected rule has been determined.

After the RP system has determined the total program processing time associated with assigning the selected rule to $\Pi_k$, where k = 1, it increments k (step 280) and then tests k to determine if it is greater than N, the number of partitions (step 290). If k is not greater than N, the RP system returns to step 240 to repeat steps 240, 250, 260 and 270 to temporarily assign the selected rule to partition $\Pi_k$, in this case partition $\Pi_2$, to generate, in step 290, a total program processing time for that temporary assignment, namely, TOT(A→2). That is, the computed processing times associated with each partition and for each cycle of the program (given the temporary assignment of Rule A to partition $\Pi_2$ are as follows:

| cycle | $\pi_1$ | $\pi_2$ |
|-------|---------|---------|
| 1 | 0 | $t_{11} + t_{12} + t_{13}$ |
| 2 | 0 | $t_{21} + t_{22} + t_{23}$ |
| 3 | 0 | $t_{31} + t_{32} + t_{33}$ |

It will be appreciated that these times are, for each cycle, identical to the processing times which were determined above for assignment of Rule A to partition $\Pi_1$, and the total program processing time, TOT-(A→2), will also be identical.

Steps 240 through 270 are interatively repeated for each value of k until the selected rule has been assigned to each partition and a value for the total program processing time TOT(x→k) has been computed for each such assignment. At that point, the value for k in step 290 will be greater than N and the RP system will sequence to step 300.

By the time the RP system has sequenced to stop 300 it has determined total program processing times for the temporary assignment of the selected rule to the various partitions. In step 300, the RP system identifies the partition assignment of the selected rule that yielded the lowest total program processing time and permanently assigns the selected rule to that partition. The permanent assignment of the rule to a partition is then recorded in the corresponding partition assignment field 170 of lookaside table 160 (see Fig. 5) of block 162 for the rule. If more than one temporary partition assignment $\Pi_k$ for the selected rule have the same lowest total program processing time, as will be the case for the first rule in table 160, the RP system assigns the selected rule to the partition $\Pi_k$ having both the lowest total program processing time and the lowest index number, k. Since Rule A is the first rule to be selected and no other rules have yet been permanently assigned to any partitions $\Pi_k$, the RP system will determine the same processing time for both partition $\Pi_1$ and partition $\Pi_2$. Thus, Rule A will be assigned to partition $\Pi_1$.

After the first selected rule is assigned to a partition, the RP system determines whether there are any other rules which have not been assigned to partitions $\Pi_k$ (step 310). If the RP system determines that there are no other rules which have not been assigned, it exits and the rule partitioning is completed. However, if table 160 includes other rules which have not been assigned to a partition $\Pi_k$, the RP system branches back to step 220 in which it selects the next rule, which is the next most time consuming unassigned rule and repeats the above-described steps to determine a permanent assignment for that rule.

In determining the processing times for the temporary assignments in each iteration (step 250), the RP system takes into account when nodes are shared among rules. This will be illustrated by the following discussion of the processing of Rule B by the RP system. For example, continuing with arrangement depicted in Fig. 5, if it is assumed that Rule B is the second most time consuming rule in table 160, then during the first iteration of processing Rule B, Rule B is first temporarily assigned to $\Pi_1$, to which, as described above, Rule A has been permanently assigned. Given this temporary assignment the computed process times associated with each partition for the first three cycles of the program are:

| cycle | $\pi_1$ | $\pi_2$ |
|-------|---------|---------|
| 1 | $t_{11} + t_{12} + t_{13} + t_{14}$ | 0 |
| 2 | $t_{21} + t_{22} + t_{23} + t_{24}$ | 0 |
| 3 | $t_{31} + t_{32} + t_{33} + t_{34}$ | 0 |

Note that since Rule A and Rule B both share $\mu$-block $\mu_1$, the time associated with that $\mu$-block, namely, $t_{11}$, is only included once in the computations.

For the next iteration of the loop including steps 240 through 290 (i.e., for k = 2), Rule B is temporarily assigned to partition $\Pi_2$, and the computed process times associated with each partition and for the first three cycles of the program are:

18

| cycle | $\pi_1$ | $\pi_2$ |
|-------|---------|---------|
| 1 | $t_{11} + t_{12} + t_{13}$ | $t_{11} + t_{14}$ |
| 2 | $t_{21} + t_{22} + t_{23}$ | $t_{21} + t_{24}$ |
| 3 | $t_{31} + t_{32} + t_{33}$ | $t_{31} + t_{34}$ |

In this iteration, the times depicted for partition $\Pi_1$ comprise the times for processing Rule A, which has been permanently assigned to that partition. In this example, it should be readily apparent that, regardless of the actual values for $t_{ij}$, Rule B will be permanently assigned to partition $\Pi_2$ since that partition has not yet had any rules permanently assigned to it. The total processing time associated with assigning Rule B to partition $\Pi_2$, given that Rule A has already been permanently assigned to partition $\Pi_1$, must be less than the alternative of also assigning Rule B to partition $\Pi_1$.

The benefits of node sharing become more apparent when deciding how to assign rules after each partition has at least one rule already permanently assigned to it. Continuing with the above example and assuming that Rule C is the next most time consuming rule after Rule B, it is first temporarily assigned to partition $\Pi_1$ (step 240 for $k = 1$). Then, in step 250, the processing times for each partition and for each cycle are computed to be:

| cycle | $\pi_1$ | $\pi_2$ |
|-------|---------|---------|
| 1 | $t_{11} + t_{12} + t_{13} + t_{15}$ | $t_{11} + t_{14}$ |
| 2 | $t_{21} + t_{22} + t_{23} + t_{25}$ | $t_{21} + t_{24}$ |
| 3 | $t_{31} + t_{32} + t_{33} + t_{35}$ | $t_{31} + t_{34}$ |

Note that these times assume that Rules A and B have been permanently assigned to partitions $\Pi_1$ and $\Pi_2$, respectively, during earlier operations. Also note the impact of node sharing on the values for partition $\Pi_1$. Since Rules A and C share $\mu$-blocks $\mu_1$ and $\mu_2$, the processing times for those $\mu$-blocks are counted only once when computing the processing times for the rules assigned to partition $\Pi_1$.

Next and in accordance with step 260, the resulting minimum processing times for each cycle, given the temporary assignment of Rule C to partition $\Pi_1$ are computed to be:

$MT_1(C \rightarrow 1) = MAX[t_{11} + t_{12} + t_{13} + t_{15}, t_{11} + t_{14}]$

$MT_2(C \rightarrow 1) = MAX[t_{21} + t_{22} + t_{23} + t_{25}, t_{21} + t_{24}]$

$MT_3(C \rightarrow 1) = MAX[t_{31} + t_{32} + t_{33} + t_{35}, t_{31} + t_{34}]$

where $MAX[x,y]$ signifies taking the larger of the two quantities x and y. And, finally in step 270, the total program processing time is computed to be $TOT(C \rightarrow 1) = \Sigma MT_i(C \rightarrow 1)$.

For the next iteration of steps 240 through 290 ($k = 2$), Rule C is temporarily assigned to partition $\Pi_2$ - (while, as before, Rules A and B are still permanently assigned to partitions $\Pi_1$ and $\Pi_2$, respectively). This time, in step 250, the processing times for each partition and for each cycle are computed to be: .

| cycle | $\pi_1$ | $\pi_2$ |
|-------|---------|---------|
| 1 | $t_{11} + t_{12} + t_{13}$ | $t_{11} + t_{12} + t_{14} + t_{15}$ |
| 2 | $t_{21} + t_{22} + t_{23}$ | $t_{21} + t_{22} + t_{24} + t_{25}$ |
| 3 | $t_{31} + t_{32} + t_{33}$ | $t_{31} + t_{32} + t_{34} + t_{35}$ |

Again, note the impact of node sharing on the values for partition $\Pi_2$. Since Rules B and C share $\mu$-block $\Pi\mu_1$, the processing times for that $\mu$-block is counted only once when computing the processing times for the rules assigned to partition $\Pi_2$.

In step 260, the resulting minimum processing times for each cycle, given the temporary assignment of Rule C to partition $\Pi_2$ are computed to be:

$MT_1(C \rightarrow 2) = MAX[t_{11} + t_{12} + t_{13}, t_{11} + t_{12} + t_{14} + t_{15}]$

$MT_2(C \rightarrow 2) = MAX[t_{21} + t_{22} + t_{23}, t_{21} + t_{22} + t_{24} + t_{25}]$

$MT_3(C \rightarrow 2) = MAX[t_{31} + t_{32} + t_{33}, t_{31} + t_{32} + t_{34} + t_{35}]$.

And, in step 270, the total program processing time is computed to be $TOT(C \rightarrow 2) = \Sigma MT_i(C \rightarrow 2)$.

19

Finally, in step 300, Rule C is permanently assigned to the panition which yields the smallest TOT-(x→k). These operations are repeated for each of the rules in table 160.

It should be readily apparent that by using the node sharing a substantial savings in total program processing times can be achieved in those cases where the number of rules exceeds the number of CPU's, which is typically the situation. Also, it should be understood that use of the above-described rule partitioning does not necessarily require the prior use of beta partitioning.

The foregoing description has been limited to a specific embodiment of this invention. It will be apparent, however, that variations and modifications may be made to the invention, with the attainment of some or all of the advantages of the invention. Therefore, it is the object of the appended claims to cover all such variations and modifications as come within the true spirit and scope of the invention.

## Claims

1. A rule-partitioning system for converting at least a portion of a target expert sytem program to a rule partitioned RETE network for execution on multiple processors, the system comprising:
   a. a rule partitioning portion for assigning different rules of the target expert system program to different partitions on the basis of previously collected processing statistics and on the use of node sharing; and
   b. a compiler for converting the target expert program to the RETE network, wherein at least some of the rules of the RETE network are assigned to the multiple processors in accordance with the partition assignments.

2. A rule-partitioning system as defined in claim 1 wherein the rule partitioning portion comprises:
   a. an iteration module for temporarily assigning a rule selected from a group of unassigned rules to each of the different partitions;
   b. an evaluation module for estimating a performance measure for each such temporary assignment of the selected rule, the performance measure being derived from the processing statistics and taking into account node sharing; and
   c. an assignment for permanently assigning the selected rule to the partition which yields the best performance measure.

3. A rule-partitioning system as defined in claim 2 wherein the performance measure is an estimate of the time it would take for the multiple processors to complete at least one recognize-act cycle of the portion of the target expert system program being rule partitioned.

4. A rule-partitioning system as defined in claim 2 wherein the selected rule is the unassigned rule requiring the most time to process.

5. a rule-partitioning system as defined in claim 3 wherein the processing statistics include the number of activations per recognize-act cylce for the nodes of the RETE network and the estimate of the time to complete at least one recognize-act cycle is derived by computing a partition process time for each partition for each recognize-act cycle, the partition process time being computed by summing the number of activations of each of the nodes which make up the rules that are assigned to that partition.

6. A rule-partitioning system as defined in claim 5 wherein a partition to which the selected rule is temporarily assigned may have permanently assigned rules that share nodes with the selected rule and wherein the rule partitioning portion takes into account node sharing by including the shared node's contribution to the partition process time only once per recognize-act cycle.

7. A rule-partitioning system as defined in claim 5 wherein the estimate of the time to complete at least one recognize-act cycle is derived by summing the largest partition process times for each recognize-act cycle over all recognize-act cycles.

8. A rule-partitioning system as defined in claim 6 wherein the nodes are grouped into a plurality of blocks such that each block of the plurality of blocks represents nodes that are shared by the same set of rules and the processing statistics include the number of activations per recognize-act cycle for the blocks of the RETE network.

9. A system comprising:
   a. a uniprocessor compiler for compiling a target expert system program to form a RETE network for execution on a single processor, some of the nodes of the uniprocessor RETE network possibly being shared by more than one rule;
   b. a processor for executing the target expert system program, the processor obtaining processing statistics in connection with each node of the uniprocessor RETE network during executionl
   c. a rule partitioning portion for assigning different rules of at least a portion of the target expert

system program to different partitions based on the processing statistics and on the use of node sharing; and

d. a multiprocessor compiler for converting the target expert system program to a RETE network for execution on multiple processors, wherein the rules of the multiprocessor RETE network are assigned to the multiple processors in accordance with the partition assignments.

10. A system as defined in claim 9 wherein the rule partitioning portion comprises:

a. an iteration module for temporarily assigning a rule selected from a group of unassigned rules to each of the different partitions;

b. an evaluation module for estimating a performance measure for each such temporary assignment of the selected rule, the performance measure being derived from the processing statistics and taking into account node sharing; and

c. an assignment module for permanently assigning the selected rule to the partition which yields the best performance measure.

11. A system as defined in claim 10 wherein the performance measure is an estimate of the time it would take for the multiple processors to complete at least one recognize-act cycle of the portion of the target expert program being rule-partitioned.

12. A system as defined in claim 10 wherein the selected rule is the unassigned rule requiring the most time to process.

13. A system as defined in claim 11 wherein the processing statistics include the number of activations per recognize-act cycle for the nodes of the RETE network and the estimate of the time to complete at least one recognize-act cycle is derived by computing a partition process time for each partition for each recognize-act cycle, the partition process time being computed by summing the number of activations of each of the nodes which make up the rules that are assigned to the partition.

14. A system as defined in claim 13 wherein a partition to which the selected rule is temporarily assigned may have permanently assigned rules that share nodes with the selected rule and wherein the rule partitioning portion takes into account node sharing by including the shared node's contribution to the partition process time only once per recognize-act cycle.

15. A system as defined in claim 13 wherein the estimate of the time to complete at least one recognize-act cycle is derived by summing the largest partition process times for each recognise-act cycle over all recognize-act cycles.

16. A system as defined in claim 14 wherein the nodes are grouped into a plurality of blocks such that each block of the plurality of blocks represents nodes that are shared by the same set of rules and the processing statistics include the number of activations per recognize-act cyle for the blocks of the RETE network.

17. A method of rule partitioning at least a portion of a target expert system program comprising the steps of:

a. compiling the target expert system program to form a RETE network for execution on a single processor;

b. identifying the nodes of the network corresponding to the portion of the target system program being partitioned that are shared by more than one rule of the portion of the target expert system program being partitioned;

c. executing the target expert system program on a single processor to obtain processing statistics on the nodes of the RETE network;

d. partitioning the rules of the portion of the target expert system program being partitioned among the processors of a multiprocessor system, the process of partitioning taking into account the possibility of node sharing; and

e. recompiling the target expert system program to form a RETE network for execution on the multiprocessor system, wherein the rules of the portion of the target expert system program being partitioned are assigned to processors in accordance with the partitioning.

18. A method as defined claim in 17 wherein the rule partitioning step comprises the steps of:

a. selecting a rule for a group of unassigned rules;

b. temporarily assigning the selected rule to each of the different partitions;

c. estimating a performance measure for each such temporary assignment of the selected rule, the performance measure being derived from the processing statistics and taking into account node sharing; and

d. assigning the selected rule to the partition which yields the best performance measure.

19. A method as defined in claim 18 wherein the performance measure is an estimate of the time it would take for the multiple processors to complete at least one recognize-act cycle of the portion of the target expert system program being partitioned.

20. A method as defined in claim 18 wherein the selected rule is the unassigned rule requiring the most time to process.

21. A method as defined in claim 18 wherein the processing statistics include the number of activations per recognize-act cycle for the nodes of the RETE network and the estimate of the time to complete at least one recognize-act cycle is derived by computing a partition process time for each partition for each recognize-act cycle, the partition process time being computed by summing the number of activations of each of the nodes which make up the rules that are assigned to that partition.

22. A method as defined in claim 21 wherein a partition to which the selected rule is temporarily assigned may have permanently assigned rules that share nodes with the selected rule and wherein the rule partitioning portion takes into account node sharing by including the shared nodes's contribution to the partition process time only once per recognize-act cycle.

23. A method as defined in claim 21 wherein the estimate of the time to complete at least one recognize-act cycle is derived by summing the largest partition process times for each recognize-act cycle over all recognize cycles.

24. A method as defined in claim 22 wherein the nodes are grouped into a plurality of blocks such that each block of the plurality of blocks represents nodes that are shared by the same set of rules and the processing statistics include the number of activations per recognize-act cycle for the blocks of the RETE network.

25. A computer program for use in connection with a computer comprising:

a. a uniprocessor compiler for enabling the computer to compile a target expert system program to form a RETE network for execution on a single processor, some of the nodes of the uniprocessor RETE network possibly being shared by more than rule;

b. a module for enabling the computer to execute the target expert system program, the computer obtaining processing statistics in connection with each node of the uniprocessor RETE network during execution;

c. a rule partitioning module for enabling the computer to assign different rules of at least a portion of the target expert system program to different partitions based on the processing statistics and on the use of node sharing; and

d. a multiprocessor compiler module for enabling the computer to convert the target expert system program to a RETE network for execution on multiple processor, wherein the rules of the multiprocessor RETE network are assigned to the multiple processors in accordance with the partition assignments.

26. A program as defined in claim 25 wherein the rule partitioning module comprises:

a. an iteration module for enabling the computer to temporarily assign a rule selected from a group of unassigned rules to each of the different partitions;

b. an evaluation module for enabling the computer to estimate a performance measure for each such temporary assignment of the selected rule, the performance measure being derived from the processing statistics and taking into account node sharing; and

c. an assignment module for enabling the computer to permanently assign the selected rule to the partition which yields the best performance measure.

27. A program as defined in claim 26 wherein the performance is an estimate of the time it would take for the multiple processors to complete at least one recognize-act cycle of the portion of the target expert system program being rule-partitioned.

28. A program as defined in claim 26 wherein the selected rule is the unassigned rule requiring the most time to process.

29. A program as defined in claim 27 wherein the processing statistics include the number of activations per recognise-act cycle for the nodes of the RETE network and the estimate of the time to complete at least one recognize-act cycle is derived by computing a partition process time for each partition for each recognize-act cycle, the partition process time being computed by summing the number of activations of each of the nodes which make up the rules that are assigned to that partition.

30. A program as defined in claim 29 wherein a partition to which the selected rule is temporarily assigned may have permanently assigned rules that share nodes with the selected rule and wherein the rule partitioning portion takes into account node sharing by including the shared node's contribution to the partition process time only once per recognize-act cycle.

31. A program as defined in claim 29 wherein the estimate of the time to complete at least one recognize-act cycle is derived by summing the largest partition process times for each recognize-act cycle over all recognize-act cycles.

32. A program as defined in claim 30 wherein the nodes are grouped into a plurality of blocks such that each block of the plurality of blocks represents nodes that are shared by the same set of rules and the processing statistics include the number of activations per recognize-act cycle for the blocks of the RETE network.

APPENDIX A

U.S. APPLICATION
S/N 103,364

UNITED STATES PATENT APPLICATION

OF

WILLIAM BARABASH
WILLIAM S. YERAZUNIS

FOR

METHOD FOR OPERATING A PARALLEL
PROCESSING SYSTEM AND RELATED APPARATUS

# I. BACKGROUND OF THE INVENTION

## A. Field of the Invention

This invention relates to parallel processing systems in general and specifically to such systems containing rule-based software.

## B. Background Information

Systems in which several data processors are linked together to perform computational steps simultaneously are known as parallel processing systems. Parallel processing systems are used to reduce the time required to perform such computational steps. This is very helpful in artificial intelligence applications which perform numerous computations to simulate human cognitive thought. In order to recreate the real-time features of human thought, those computations must be performed at very high speeds.

The basic computations performed by a rule-based artificial intelligence system are searches among "working memory elements" (WMEs). Each WME is a set of related data, such as the age, sex, height, weight, and address of an individual. The WMEs, however, are not necessarily related to each other, nor are they ordered with respect to each other.

The searches are organized according to various "production rules." A "production rule" comprises a set of "conditions" and a set of "operations." The operations are enabled to be performed when the conditions are satisfied. A condition is

satisfied when a WME specified by the condition exists, and when the data of the WME meets various criteria specified by the condition. The criteria may be, for example, mathematical (e.g., equality, less than, greater than) or of some other type. When the conditions of a production rule are satisfied, the processing system may perform the "operations" for that rule. Those operations may include causing an output or modifying, creating, or deleting other WMEs.

"Production rules," also referred to as "productions," are usually stored in a memory along with the WMEs. The parallel processors perform the computational steps specified by the production rules.

Production rules may be "if-then" rules of the type used in connection with OPS5 programs described in OPS5-User Manual, Charles L. Forgy, Technical Report CMU-CS-81-135, Computer Science Department, Carnegie Mellon University, Pittsburgh, Pennsylvania, July 1981, which is herein incorporated by reference. When they are stored in memory, each production rule contains (1) an indication that the rule is a production rule, (2) the name of the rule, (3) a "left-hand" or "if" side which specifies the "conditions," and (4) a "right-hand" or "then" side which indicates "operations" to be performed when a rule's conditions have been satisfied.

Often, the conditions specified in a rule are satisfied by more than one set of working memory elements. For example, if

the rule had as its conditions (1) a man and (2) a woman, and if the WMEs included data on the residents of an apartment building, then there would likely be several combinations of WMEs, (i.e., pairings of one man and one woman) which would satisfy the conditions of that rule. When this occurs, the operations specified by that rule can be performed according to some priority determined by the WMEs which satisfied the rule. Furthermore, in a case of conflict when all the conditions of several rules have been satisfied, the rule having the highest priority is the one whose operations are substantially performed.

A "recognize-act cycle" refers to the set of steps wherein (1) conditions of production rules are satisfied by the working memory elements, (2) the satisfied production rules with the highest priority is determined, and (3) the "then" side actions of the rule with highest priority are performed. The recognize-act cycle is typically the basic set of functional steps for a parallel processor system.

An example of a production rule is:

(P  PRODNAME (C1 attribute1 value1) (C2 attribute1 value2, attribute2 value3) -------- (OPER1)).

This rule is exemplary of the production rules used in OPS5 programs. The symbol P indicates that the rule is a production rule (as distinguished from any other rule recognizable by a parallel processing system). The name of the rule is PRODNAME. Left-hand side conditions of the rule are shown with "class" indicators C1 and C2 and specify WMEs.

Attributes, such as attribute1 and attribute2, refer to other data associated with the WMEs which meet the corresponding condition. For example, if a condition was "male," an attribute might be hair color. Value1, value2, and value3 are the values of the corresponding attributes which must be met to satisfy the condition. The attributes and values together thus specify "condition tests," which are the criteria referred to above. The operation, OPER1, is performed when conditions C1 and C2 and the associated conditions tests are satisfied. One or more corresponding WMEs may exist for each condition of an indicated class, specified attributes, and associated values.

Those corresponding WMEs are stored in a memory accessible by the parallel processor for performing the computational steps of production rule PRODNAME. These WMEs may have been stored in the memory during initialization, or they may have been created as a result of an operation performed at the conclusion of a previous recognize-act cycle.

The processor(s) performing the computational steps of a rule access(es) WMEs stored in a memory to identify which of those WMEs satisfy production rule conditions. For the production rule listed above, a processor will evaluate each WME available to it at the end of a previous recognize-act cycle to find any WMEs which satisfy "(C1 attribute1 value1) or (C2 attribute1 value2 attribute2 value3)." If the processor finds at least one WME corresponding to each of the conditions of the production rule, the rule is satisfied and can be "fired."

The number of WMEs which satisfy any given condition of a rule may vary widely for different production rules. The processor(s) performing the processing or computational steps for a rule typically keep(s) track of the WMEs satisfying each condition of the rule. This is necessary because the determination of whether a WME can satisfy a later condition may depend on which WMEs satisfied an earlier condition. A processor typically has processing software to keep track of the order in which each WME was most recently created or modified. One means of keeping track involves "time tags," which identify each WME according to the relative time of most recent creation or modification. Both the information regarding the different WMEs which satisfy a condition and the time tag for WMEs may be used to determine the priority of rules.

Production rule PRODNAME described above, has only two conditions C1 and C2. In general, however, a rule may have many more than two conditions.

One approach to implement this type of rule processing is the Rete Match Algorithm, described in Charles L. Forgy, "Rete: A Fast Algorithm For The Many Pattern/Many Object Pattern Match Problem," _Artificial Intelligence_, Vol. 19, September, 1982, which is herein incorporated by reference. According to the Rete Match Algorithm, each WME tested and found to satisfy any given condition of a rule, except the first condition, is stored as an "alpha token" in a portion of memory referred to as "alpha

memory." Several alpha tokens may exist which correspond to a single satisfied condition of a single rule. For each WME which satisfies the first condition of a rule, a "beta token" is created and stored.

According to the Rete Match Algorithm, for each beta token satisfying a first condition of a rule, an alpha token is sought to satisfy a second condition of that rule. The production rule can only fire if an alpha token satisfying the second condition exists and if a beta token satisfies the first condition. Without also satisfying the second condition, satisfaction of the first condition will not allow the production rule to fire.

If a beta token for the first condition and an alpha token for the second condition exist, then the production rule is partially satisfied as to those two conditions, and the partial satisfaction of the production rule for those conditions can be preserved in the form of another beta token stored in a beta memory corresponding to the combined first and second conditions. In a similar manner, beta tokens are stored for each group of successive conditions, starting with the first condition, that are satisfied. These beta tokens are propagated to successive beta memories for each successive condition each time an alpha memory provides an alpha token satisfying the next condition of a rule. When a beta token is stored in the last beta memory, indicating that every condition of a production rule has been satisfied, the rule is ready for firing.

Since for any condition several alpha tokens satisfying that condition may exist, several combinations of alpha tokens may result in a rule being ready to fire. The specific working memory elements or alpha tokens satisfying a condition may have a bearing on the priority of a rule. Accordingly, satisfaction of each rule is sought with each beta token and each alpha token in order to maintain the highest possible priority for a rule.

Many computational steps are required to determine whether and in how many ways any one rule is satisfied by the sets of beta and alpha tokens. Typical processor systems process several thousand production rules causing a great number of computational steps to be performed.

To manage this load, there have been attempts used to distribute the computational tasks across parallel processors and reduce the time required for processing production rules. One approach is known as the "rule-parallelism" approach. According to this approach, each production rule is assigned to only one of the parallel processors on the system. The rules are divided approximately equally among the processors. For example, if there were 8000 rules and 4 parallel processors, each processor is assigned a nonoverlapping subset of 2000 rules.

Each processor independently tests all the working memory elements to see which ones satisfy the conditions of the rules in its subset. At the end of each recognize-act cycle, priority among the fully satisfied rules is determined and the operations specified by the highest priority rule are performed.

Despite the relatively equal division of rules among processors with this approach, rule-parallelism does not ensure equality in the number of tasks to be performed by processors. Certain processors may have rules for which many WMEs satisfy the specified conditions, while other processors may be assigned rules having relatively few condition-satisfying WMEs. Accordingly, when the processors assigned rules with few corresponding WMEs are completed, the other processors will still be processing rules. Thus, there may be task inequality and little reduction in processing time. Furthermore, because different rules may have the same conditions, redundant testing of WMEs will result.

Another approach, known as condition-parallelism, has been implemented to overcome the problems experienced with the rule-parallelism. According to condition-parallelism, only one processor tests WMEs for each condition specified in a rule. Since the difference between WMEs satisfying any two conditions is much less likely to be as large as the difference between WMEs, satisfying any two rules, the task inequity from condition-parallelism is less likely to be as great as in rule-parallelism.

Condition-parallelism, however, imposes inter-processor communication overhead. Any given processor which tests WMEs to satisfy a condition must communicate each beta token for the satisfied condition to the processor performing the test for the

next condition of a rule. Communication overhead result each time a processor must wait for the beta token associated with a previous condition or retrieve a beta token from a communication link, another approach is known as "token-parallelism." This approach is an extension of condition-parallelism and equally distributes tests at junctions or "nodes" between beta memories and alpha memories to determine whether an alpha token exists for an existing beta token. Substantially simultaneous processing is also achieved by this approach, but again at the cost of having to provide greater processor communication overhead. In fact, since the computational steps are divided at an even more basic level than with condition-parallelism, the processor communication overhead is even greater for token-parallelism.

It is, therefore, an objective of the present invention to provide a method for operating a parallel processing system which ensures substantially equal distribution of computational tasks across processors and reduces the time required for processing production rules, regardless of any variation in the number of condition-satisfying working memory elements available for satisfying different rules.

It is another objective of the present invention to provide a processing method which does not experience substantial interprocessor synchronization delays and communication overhead.

It is a further object of the present invention to provide a processing method which minimizes the total amount of data to be communicated between processors during a recognize-act cycle.

It is yet another object of the present invention to provide a processing method which does not require a large shared memory for use by each of the system processors.

Additional objectives and advantages of the present invention will be set forth in part in the description which follows and in part will be obvious from that description or may be learned by practice of the invention. The objectives and advantages of the invention may be realized and obtained by the methods and apparatus particularly pointed out in the appended claims.

## II.  SUMMARY OF THE INVENTION

To achieve the objectives and in accordance with the purpose of this invention, as embodied and broadly described herein, a method according to the present invention uses a limited number of parallel processors, each of which has access to all the production rules and all the WMEs.  At some point during the rule processing, however, the beta tokens or memory elements are divided into disjoint subsets and spread among the processors. Each processor continues processing its disjoint subset of beta memory elements until all of the rules have been evaluated against all the WMEs.

More specifically, the present invention includes a method for operating a parallel processing system having a first number of processors.  The processors have access to working memory elements representing data to be examined, and the processors

implement production rules. The production rules specify operations to be performed by the processors when a series of conditions associated with the production rules are satisfied by specific ones of the working memory elements. The method comprises the step of identifying groups of working memory elements by each of the processors substantially simultaneously. Each of the groups corresponds to a unique one of the conditions of the production rules, and all of the elements in each group satisfy that corresponding condition.

Another step in the method of this invention is the formation of first sets of pairs of working memory elements from the groups by each processor substantially simultaneously. Each of those sets corresponds to a unique one of the production rules, and the elements in each of the pairs in the first sets respectively satisfy first and second conditions of the corresponding production rule.

The method also comprises a step of forming a sequence of next sets of working elements by each processor, substantially simultaneously, from the groups of working elements. Each of the sequences is associated with at least one of the production rules such that the next set in each sequence corresponds to the next one of a series of conditions for the associated production rule. Each of the sets in each of the sequences contains working memory elements contained in a prior set in that sequence, as well as working memory elements from groups which satisfy the corresponding condition in the associated production rule.

Each processor, substantially simultaneously, also subdivides a selected one of the sets in each of the sequence into unique, non-overlapping subsets having approximately the same size. Each of the subsets corresponds to a different processor and thereafter each processor only forms the sets in each sequence succeeding from the corresponding subset.

Then, according to the method of the invention, all the operations specified by one of the production rules, for which all of the conditions have been satisfied, are performed.

The accompanying drawings, which are incorporated in and which constitute a part of this specification, illustrate an embodiment of the invention and, together with the description, explain the principles of the invention.

## III.  A BRIEF DESCRIPTION OF THE DRAWINGS

Fig. 1 shows a hardware configuration for implementing this invention;

Fig. 2 shows a different hardware configuration for implementing the present invention;

Fig. 3 is a flowchart containing steps for implementing a process for start-up of a master processor;

Fig. 4 is a flowchart containing steps for implementing a process for start-up of each slave processor;

Fig. 5 is a flowchart containing the steps for implementing a recognize-act cycle in accordance with the present invention;

Fig. 6 is a flowchart containing the steps for implementing a production rule matching scheme in accordance with the present invention; and

Fig. 7 is a flowchart containing the steps for implementing a conflict resolution scheme in accordance with the present invention.

## IV.   DESCRIPTION OF THE PREFERRED EMBODIMENT

Reference will now be made in detail to a presently pre-ferred embodiment of the invention, examples of which are illus-trated in the accompanying drawings.

Figs. 1 and 2 show two hardware systems which can be used to implement the present invention. In its broadest aspects, however, the invention is not dependent upon the particular hardware systems employed. The objects of the present invention can be achieved using a variety of different hardware configura-tions as long as the present invention is practiced.

Fig. 1 shows one hardware configuration 10 containing two data processing systems 15 and 20, each of which contains a cen-tral processing unit, 17 and 21, respectively, and a cache memo-ry unit, 19 and 22, respectively. The units are coupled to a large shared memory 30 containing, 128 megabytes of storage, via a memory bus 35.

Fig. 2 shows an alternative hardware embodiment in which the same two data processing systems 15 and 20 are each

connected to a local memory 40 and 50, respectively, as well as
to a small shared memory 60 via memory bus 65. Both hardware
configurations can be used to implement the method of this
invention. The choice of the particular hardware configuration
depends upon many considerations, such as circuit efficiencies,
cost, and perhaps availability of hardware.

The memories shown in Figs. 1 and 2 store WMEs and produc-
tion rules. Preferably, the WMEs also include time tags which
indicate when the particular element was created or last modi-
fied. The importance of time tags is explained in greater
detail below in relation to the concept of priority and conflict
resolution.

The production rules are stored as a set of conditions,
possibly having condition tests. Typically the conditions spec-
ify a characteristic of certain WMEs and the condition tests
specify further qualifications which a WME meeting the condi-
tions must satisfy. For example, in a "voter" production rule,
the condition may be "resident" and the condition test may be
"age greater than 21." The operations in the production rules
can be subroutines which would be executed if the production
rule is chosen to "fire."

The memories also contain work queues. These are stacks of
instructions to be performed by one or more processors. In
addition, the memories may contain flags, such as for
communicating between processors, data, such as floating point

numbers, programs, such as programs for performing special functions, or special areas, such as communication areas.

The data and programs are stored in the different memories in accordance with a particular configuration. In Fig. 1, all data and programs are obviously stored in memory 30. In Fig. 2, each of the local memories 40 and 50 preferably contain all the production rules and WMEs, as well as alpha and beta memories which, as explained above, are created during the processing of the production rules. Shared memory 60 contains the work queues (with WME creation/delete instructions), flags (e.g., start-slave/finish-slave), floating point numbers, and communication areas.

Both Figs. 1 and 2 show a parallel processing system having two processors, but more than two processors may be used in accordance with the method of this invention. The processors, however, must have access to the working memory elements and must be able to implement the production rules.

Prior to processing the production rules in accordance with the method of this invention, the processors must initialize themselves during start-up cycles. Preferably, start-up cycles are different for master and slave processors. It is possible for the master processor to remain a master processor and not participate in the operations carried out by the slave processors, but preferably the master processor becomes a slave processor during the parallel processing operation.

Preferably, the master processor is also preselected, although preselection is not required in accordance with this invention. The start-up routine for the master processor is shown as routine 100 in Fig. 3. As shown in Fig. 3, some instruction, for example, from an operator's console, generates a "run program" signal. This signal initiates the start-up sequence with a processor designated as a master (step 110). The master processor then begins certain system initialization steps, such as allocating memory to the shared memory areas and the local memory areas (step 120).

The master processor then loads the rules into its local memory (step 130) and clears a space in its local memory into which WMEs will be stored (step 140). Next, the master processor connects to shared memory (step 150). This connection generally involves well-known operating system commands which indicates to the operating system that other processors can access portions of the shared memory.

The master then performs an operation to determine that it is, in fact, the master (step 160). In the preferred implementation of this invention, all of the slave processors have the word "slave" in their name. The master processor checks its name to ensure that it does not contain the word "slave." The master then performs the start-up routine.

The start-up routine involves the storage of control flags in a control flag area (step 170). The control flags of

interest in this implementation of the invention are a "GO" flag, which the master processor sets for the slave processors to begin certain operations, and a "DONE" flag, which the slave processors set when they finish those operations. After setting the control flags, the master processor starts or prompts each of the slave processors to begin their start-up routines (step 180).

Fig. 4 shows a flowchart for the preferred implementation of a slave start-up routine 200. Preferably, the slave processor performs the same initialization in step 210 as the master processor performed in step 120. Slave processors then load the rules into their own local memory (step 220) and clear a WME space in their local memories (step 230). Finally, the slave processors connect the shared memory to their processors (step 240) and then enter a wait state.

The master processor then resumes its start-up routine 100 and begins a start-up rule (step 190). In the start-up rule, the master processor sets several initial conditions. For example, the master processor generates "WME-create-instructions" so that any initial WMEs may be stored into the WME a eas. In the preferred implementation, the master processor loads the work queue in the shared memory area with the WME-create-instructions (step 195). Those instructions contain "skeletons" of the WMEs as well as certain data to be placed into the skeletons to become WMEs. After the work queue is loaded with the WME

instructions, a recognize-act cycle in accordance with the present invention can begin.

Fig. 5 shows the steps for preferred implementation of a recognize act cycle 300 in accordance with the present invention. Initially, the master processor sends a "GO" signal to the slaves (step 210). Preferably, this is accomplished by the master processor's setting the start slave flags in the shared memory area. Immediately after setting those flags the master processor becomes a slave processors itself (step 320). The slave processor then, substantially simultaneously, begin a matching operation for each production rule. The detailed implementation of this matching is shown in Fig. 6 as matching algorithm 400.

Algorithm 400 begins with each of the processors, substantially simultaneously, identifying groups of the WMEs.

Each of those groups correspond to a unique one of the conditions of each of the production rules, and all of the elements in each group satisfy the corresponding condition. If several production rules have the same condition, which is not uncommon, there would still be only one working group for that condition.

Preferably, the identifying step occurs as the WMEs are created. Therefore, the first action taken by the slave processors after they begin, is to begin executing the instructions in the work queue. When the slave processors execute the WME-create-instructions, they also then test created WMEs against

the different conditions in each of the rules and identify the groups containing that condition. It is also possible, in accordance with the invention, to prestore the initial WMEs and to implement the identification step by initially examining all of the prestored WMEs.

After the slave processors identify the groups, each processor, substantially simultaneously, forms for each rule a first set of pairs of WMEs from the groups of WMEs (step 420). The first sets are formed as follows:

(1) The first condition for a rule must be satisfied by the WME(s) in one of the groups;

(2) The first WME must satisfy any condition tests associated with the first condition;

(3) The second condition for that same rule must also be satisfied by the WME(s) of a group which is usually a different group of WMEs than the group satisfying the first condition; and

(4) The second WME must satisfy any condition tests associated with the second condition.

The conditions for each rule must be considered in a serial fashion for optimum implementation. Thus, in forming sets, a first condition must be satisfied before determining whether a second condition must be satisfied, and the second condition must be satisfied before determining whether a third condition is satisfied, etc. A corollary to the principle that optimization is achieved by the serial consideration of conditions is that any condition tests must only require analysis of WMEs that have met prior conditions or comparison to constant

values. Since the subsequent conditions have not yet been ana-
lyzed, WMEs which meet those subsequent conditions have not yet
been recognized by the system.

Next, each slave processor subdivides the first sets into
approximately equal-size subsets substantially simultaneously
(step 430). The subsets are unique and non-overlapping and each
corresponds to a different slave processor. After subdivision,
each of the processors will only form succeeding sets from the
corresponding subsets.

Different subdivision schemes are possible in accordance
with the present invention, but such schemes also should produce
the subsets of substantially the same size. For example,
subsets can be allocated sequentially in a "card dealing"
algorithm. This algorithm employs modulo n division where n is
the total number of processors. Thus, processor 1 corresponds
to the first, n + 1st, 2n + 1st, . . . groups; processor 2 cor-
responds to the second, n + 2d, 2n + 2d, . . . groups, etc.
Alternatively, the allocation scheme can be based upon the sizes
of the subsets. In the preferred embodiment, the slave proces-
sors examine a digit, such as the last digit of the first WME in
each subset, and allocate, according to that digit, elements of
the first sets.

The slave processors then begin processing their corre-
sponding subsets substantially simultaneously, but independent
of each other (step 440).

A loop then begins in which each processor forms, from the groups of WMEs and substantially simultaneously, a sequence of next sets of WMEs. Each of the sequences is associated with at least one of the production rules. Furthermore, in each sequence, each next set corresponds to a unique one of the series of conditions for the associated production rule such that the series of conditions proceeds as in a corresponding manner to the sequence of next sets. Each of the sets in a sequence contains only WMEs from the immediately prior set of that sequence, as well as WMEs from the one of the groups which satisfy the condition to that set.

Because the slave processors are only working with a subset of first sets, (hence, subset of "beta tokens"), the processing of the rules is divided relatively equally among the slave processors and the processing can be accelerated considerably. Furthermore, such division requires very little interprocessor communication. The slave processors are are looking at every rule and all have access to every group of WMEs.

After each next set is formed, the processors determine whether there are any rules ready to fire (step 460). A rule is ready to fire when there exists a set containing WMEs which satisfy all of the conditions and condition tests of the associated production rule. If no production rule is ready to fire, then a check for rules containing untested conditions is performed as described below (in step 480).

If a slave processor finds a production rule which is ready
to fire, that processor records that rule, along with the corre-
sponding set of WMEs which satisfy conditions of that rule (step
470).

The matching algorithm described above can be further
optimized by permitting the processors to remember (store and
access) from a first recognize-act cycle to a next, the sets of
WMEs or "beta tokens" which partially or completely match the
conditions of the production rules. Thus, preferably, the sets
WMEs available to the processors are updated incrementally dur-
ing the next recognize-act cycle only to reflect the creation,
modification, or deletion of WMEs performed after the end of the
first recognize-act cycle. This technique for optimizing a
matching algorithm is described in the article by Forgy on Rete,
cited earlier.

After recording rules which are ready to fire, or after the
processor has determined that no rules are ready to fire, the
processor determines whether any production rules remain with
conditions that have not yet been tested (step 480). This step
addresses the situation in which the different production rules
have different numbers of conditions. In such situations, cer-
tain production rules will have all of their conditions tested
before all of the production rules' conditions are tested. If
such production rules remain, then the slave processor repeats
step 450 and forms the next set of WMEs. If the slave processor

has tested all of the conditions in all the rules, then the matching algorithm is finished for that slave processor.

In algorithm 400 the slave processors subdivide the sets into subsets after forming the first sets containing pairs of WMEs. The subdivision however, need not be performed at that point. The subdivision into subsets can occur after later sets are formed. It may also be advantageous to subdivide into subsets at different times which are determined according to the production rules being processed. In such a case, the production rules would contain an indication of the number of conditions (i.e., at what level) that should be tested before division into subsets. In such a case, the slave processors would subdivide, for a rule, at the level indicated by the associated production rule.

As shown in Fig. 5, after the matching is completed, each slave processor must perform conflict resolution of the rules which are ready to fire (step 340). Preferably, this is done using the time tags of WMEs which cause the rules to fire. The detailed diagram of a conflict resolution algorithm is shown in Fig. 7 as method 500.

Conflict resolution occurs because it is likely that more than one set of WMEs may cause a particular rule to fire, and it is also possible that several rules are also ready to fire. Since in accordance with the protocol, only one rule can fire for each cycle, some priority scheme must be used to determine

which rules should fire. Method 500 implements both a means ends analysis (MEA) (step 505) conflict resolution and "lexicographical" (LEX) conflict resolution in its entirety.

MEA conflict resolution presumes that the priority of any rule depends most importantly on the satisfaction of the first condition in that rule. Accordingly, to begin conflict resolution, each processor sorts the ones of its rules which are ready to fire by analyzing the time tag on the WMEs which meet the first condition ("1st WMEs"). Each processor gives highest priority, among 1st WMEs to the 1st WME having the most recent time tag (step 510). The most recent time tags for the 1st WMEs of the different rules are then compared to determine the rule with the 1st WME having the most recent time tags (step 515).

For example, assume a first rule with time tags $\underline{3}$, $\underline{2}$, $\underline{1}$ for its first, second and third WMEs, respectively, and a second rule with time tags $\underline{4}$, $\underline{2}$, and $\underline{1}$ for its first, second and third conditions, respectively.

After sorting according to the time tags of the 1st WMEs, (step 510), time tags $\underline{3}$ and $\underline{4}$ of rules 1 and 2, respectively, are compared to determine which of those tags is most recent (step 515). Rule 2 has the most recent time tag for a 1st WME, time tag $\underline{4}$, of the most recent time tags for the rules. Next, the processor sees if, among rules, there is more than one of its "ready-to-fire" rules having a WME with the most recent time tag for a 1st WME (step 520). In the example given, the

processor sees if there is more than one rule which has time tag 4. If not, then rule 2 is the rule which becomes the "rule to fire" and the conflict resolution is over (step 525). Otherwise, only the rules having 1st WMEs with the most recent time tags satisfying the first condition are analyzed further (step 530).

The rules having the newest time tags are subsequently analyzed using LEX conflict resolution. In fact, a processor may begin conflict resolution subsequent to step 530 relying completely on LEX conflict resolution. In such a case, all rules are analyzed, not just rules having the most recent 1st WME.

WMEs for each rule for which all conditions have been satisfied are sorted according to recency (i.e., most recent to least recent) of time tags (step 535). The processor determines which of the time tags for the condition-satisfying WMEs of each rule is most recent, and which of the time tags is next most recent. The processor does this for all of the time tags in a rule. The time tags which are the most recent (called the "first most recent" time tags) for the rules are then compared. The rules having the first most recent time which is newest (i.e., most recent) has the highest priority (step 540).

For example, assume a first rule with time tags 9, 6 and 7 and a second rule with time tags 3, 8 and 1, and assume that the processor determines that the order of recency for the tags of rule 1 is 9, 7 and 6 and 8, 3 and 1 for rule 2. The first most

recent tags are $\underline{9}$ and $\underline{8}$ for rules 1 and 2, respectively. The processor then compares first most recent time tags for differ-. ent rules to determine a newest time tag (step 540). In the example, the processor determines that, as between the first most recent time tags for rules 1 and 2, rule 1 has the "newest" first most recent tag, time tag $\underline{9}$.

Thereafter, the processor determines whether, among the rules it is evaluating, there is more than one rule having the value of the "newest" time tag (step 545). In the example, the processor would check whether more than a single rule has tag $\underline{9}$ as its first most recent time tag. If not, then the rule with the newest time tag is the rule which become the "rule to fire" (step 550), and conflict resolution concludes. Otherwise, any rules which do not have a WME with the "newest" time tag value are eliminated from further consideration (step 555).

Subsequently, the next most recent time tags for each rule are compared against each other to obtain the next newest tag (step 560). In the example, if both rules had a $\underline{9}$ as the newest tag, the processor would evaluate next newest tags $\underline{7}$ and $\underline{3}$, for rules 1 and 2, respectively, and see that rule 1 had the next newest tag $\underline{7}$.

Again, the processor would test the remaining rules to determine whether more than one rule had a WME with the "next newest" tag (step 565). If not, the rule with a WME having the "next newest tag" becomes the "rule to fire" and conflict

resolution ends (step 570). If, however, more than one rule having a WME with the next newest time tag exist, these rules are checked by the processor to determine whether any WMEs remain whose time tags have not been analyzed (step 575). If not, the processor makes an arbitrary selection of a rule to fire from among the remaining rules (step 580).

If WMEs with unanalyzed time tags remain only the rules having the "next newest" time tags are analyzed, and the other rules are eliminated from consideration (step 585). An analysis of the WMEs with the "next newest" tags occurs with the loop of steps 560, 565, and 575 and 585 until only one rule has a WME with a "next newest" time tag or until no WMEs remain to be analyzed and an arbitrary selection of rules is made. When the processor finds a single rule having a next newest time tag, that rule is selected at the "rule to fire" and conflict resolution ends.

Method 500 used both the recency of time tags and the number of condition tests for each of the rules in order to determine priority and to select which rule would be the rule from the particular processor to fire. It is also possible to have use another attribute of the rules ready to fire, such as looking for particular conditions in each one of the rules.

When the processor finishes conflict resolution step 340, it sets its DONE flag in the shared memory area. The master processor, when it completes action as a slave processor,

monitors such flags and determines when all of the slave processors have set their DONE flags. At that point the master processor resumes its status as master (step 350).

Then each slave processor communicates to the master processors the production rule which is ready to fire and which has the highest priority. If a slave processor has no rules ready to fire, it will communicate this information to the master processor.

The slave processors then enter a wait state and the master processor implements a conflict resolution method to determine which of the production rules from each of the processors has the highest priority (step 370). Preferably, the conflict resolution method 500 in Fig. 7 is employed for this purpose also. The master processor then performs the operations for the chosen production rule, which has the highest priority of the rules of all of the processors (step 380).

The operations performed could involve several different actions. If the action is the creation or deletion of a WME, then, rather than actually creating the WMEs, the instructions for creation or deletion are placed on the work queue for later execution by each of the slave processors.

The operations performed could also involve reading or writing to a file. This reading or writing is the method by which input and output is effected. Another operation could be a halt operation which stops the machine. The machine would

also stop if no rules was ready to fire during the recognized-act cycle 300, or if the processors were halted extremally.

After a production rule fires (i.e. after the operations are performed), the master processor identifies the slave processor which sent the rule that was fired. The master processor then causes that slave processor to erase the rule which fired and the associated set or "beta token." This erasure prevents an endless loop in which the same rule continuously fires. It should be noted that only the "beta token" corresponding to conditions of the rule, as satisfied, is erased. The rule remains available to be satisfied by other WMEs and the WMEs themselves remain available to satisfy other rules.

It will be apparent to those skilled in the art that modifications and variations can be made in the method of this invention by persons of ordinary skill in the art. The invention in its broader aspects is not limited to specific details, representative methods and apparatus, and illustrative examples shown and described. Departure may be made from such details without departing from the spirit or scope of the general inventive concept.

WE CLAIM:

1.    A method for operating a parallel processing system
having a first number of processors, said processors having
access to working memory elements representing data to be exam-
ined and said processors implementing production rules speci-
fying operations to be performed by the processors when a series
of conditions associated with the production rules are satisfied
by specified ones of the working memory elements, the method
comprising the steps of:

identifying, by each said processor substantially si-
multaneously, groups of said working memory elements, each of
said groups corresponding to a unique one of the conditions of
each of said production rules such that all of the elements in
each group satisfy the corresponding condition;

forming, by each said processor substantially simulta-
neously and from said groups of working memory elements, first
sets of pairs of said working memory elements, each of said sets
corresponding to a unique one of said production rules, the ele-
ments in each of the pairs in said first sets respectively sat-
isfying first and second conditions of the corresponding produc-
tion rule;

forming, by each said processor substantially simulta-
neously and from said groups of working memory elements, a se-
quence of next sets of said working elements, each said sequence
being associated with at least one of said production rules such

that each said next set in each said sequence corresponds to a next one of the series of conditions for the associated production rules, each of said sets in each of said sequences containing working memory elements contained in a prior set in that sequence as well as working memory elements from said groups which satisfy the corresponding condition in the associated production rule;

subdividing, by each said processor substantially simultaneously, a selected one of said sets in the each said sequence into unique, nonoverlapping subsets having approximately the same size, each of said subsets corresponding to a different processor, and each said processor only forming the sets in each sequence succeeding said corresponding subset; and

performing all of the operations specified by one of the production rules for which all conditions have been satisfied.

2.  The method of claim 1 further including the steps of:

determining, by each said processor, the ready ones of said production rules for which that processor has formed a set satisfying all of said conditions of the rules;

choosing, by each said processor, one of the ready production rules;

communicating the chosen production rules from said processors to a priority determination element; and

selecting, by said priority determination element, one of said chosen production rules according to a predetermined priority scheme, to obtain a selected production rule.

3.  The method of claim 2 wherein said selecting step is performed by a one of said processors.

4.  The method of claim 3 wherein said priority determination element is said one processor.

5.  The method of claim 2 wherein the step of performing the specified operations includes the step of performing the operations specified by the selected production rule.

6. The method of claim 5 wherein each of said working memory elements includes a time tag;

wherein said communicating step includes the step of communicating information about the working memory elements which satisfy the chosen production rules; and

wherein said selecting step includes the step of using a priority scheme based on the time tags in the working memory elements satisfying the chosen production rules.

7. The method of claim 6 wherein said ready production rules choosing step includes the step of comparing the time tags of the working memory elements satisfying the ready production rules.

8. The method of claim 7 wherein each of said working set memory elements includes a time tag, and wherein said subdividing step includes the step of assigning subsets to processors according to the time tags in at least one working memory element in the subsets.

9. The method of claim 1 wherein said operations performing step is performed by a master processor.

10. THe method of claim 9 wherein said master processor is one of said plurality of processors.

11. The method of claim 1 wherein said sequence of steps are continuously repeated.

12. The method of claim 1 wherein said processors each have a local memory, and wherein said method includes the step of storing said working memory elements and said production rules into said local memories.

13. The method of claim 1 wherein said processors each have a local memory and are coupled to a shared memory, and wherein said method further includes the steps of:

storing certain of said working memory elements and said production rules into said local memories; and

storing the other of said working memory elements and said prodution rules into said shared memory.

14. The method of claim 13 wherein said processors also include additional programs and data stored in said shared memory and said local memories.

15. The method of claim 1 wherein said step of subdividing occurs after the step of forming said first sets.

16. The method of claim 1 wherein said production rules each indicate a level of subdivision corresponding to one of the series of conditions for that rule, and wherein for each rule said step of subdividing for each rule occurs at the level indicated for that production rule.

17. The method of claim 1 wherein certain of said conditions include condition tests, and wherein the forming steps each include the step of ensuring that the ones of said working memory elements satisfying the conditions including condition tests also meet said condition tests.

18. The method of claim 1 wherein the step of subdividing said sets includes the step of classifying said sets into the first number of classes according to a characteristic of the next sets such that each of said classes corresponds to a unique one of said first number of processors.

19. The method of claim 18 wherein the step of classifying said sets is performed in accordance with a characteristic of said working memory elements of the sets being classified.

## ABSTRACT OF THE INVENTION

A method for operating a parallel processor system implements a beta-partitioning algorithm. According to that method, groups of working memory elements are identified which satisfy each of the conditions of all of several production rules. Then, sequences of sets are formed each corresponding to one of the production rules. The sets represent combinations of working memory elements which satisfy some or all of the conditions for the corresponding production rule. At some point during the formation of sets, the sets are subdivided into relatively equal-size subsets, each of which is assigned to a different processor. Each processor, which previously had been performing the same operations as the other processors, continues processing only its assigned subset.

# FIG. 1.

<u>10</u>

# FIG. 2.

<u>10'</u>

## FIG. 3.

100

```
RUN
PROGRAM ──110
(MASTER)
    │
    ▼
SYSTEM
INITIALI- ──120
ZATION
    │
    ▼
LOAD RULES
INTO
LOCAL ──130
MEMORY
    │
    ▼
CLEAR WME ┌140
SPACE IN
LOCAL
MEMORY
    │
    ▼
CONNECT
SHARED MEM.
TO
PROCESSOR
```

```
        ┌160    MASTER
              DETERMINES
              THAT IT IS
                 THE
               MASTER
                  │
                  ▼           ┌170
              STORE
            CONTROL FLAGS
            (GO & DONE) IN
            CONTROL FLAG
                AREA
                  │
    180           ▼
              START
              SLAVE
            PROCESSORS
                  │
                  ▼
                 (A)
    190            │
                  ▼
              START UP
                RULE
                  │
                  ▼
    195       LOAD WORK
            QUEUE WITH
                WME
                  │
                  ▼
              RECOG-
               NIZE
                ACT
               CYCLE
```

## FIG. 4.

200

(A)
  │
  ▼
```
SYSTEM        ┌210
INITIALI-
ZATION
  │
  ▼           ┌220
LOAD RULES
INTO LOCAL
MEMORY
  │
230 ┐▼
CLEAR WME
SPACE IN
LOCAL
MEMORY
  │
  ▼
CONNECT       ┌240
SHARED
MEMORY TO
PROCESSORS
  │
  ▼
WAIT
```

# FIG. 5.

300

RECOG-
NIZE
ACT
CYCLE

310 — MASTER
PROCESSOR
SENDS "GO"
SIGNAL TO
SLAVES

320
MASTER
PROCESSOR
BECOMES
A SLAVE

330
SLAVE PROCESSORS
PERFORM MATCHING
FOR EACH RULE

SLAVE PROCESSORS
PERFORM CONFLICT
RESOLUTION FOR
RULES READY TO
FIRE — 340

SLAVE PROCESSOR
WHICH WAS

MASTER BECOMES
MASTER AGAIN

BEST RULE READY
TO FIRE & CORRES-
PONDING WMES — 360
TRANSFERRED
TO MASTER

MASTER PROCESSOR
PERFORMS CONFLICT
RESOLUTION OF
BEST RULES FROM — 370
ALL PROCESSORS

380
PERFORM
OPERATIONS FOR
RULE WITH
HIGHEST
PRIORITY

IN SLAVE FROM
390 — WHICH FIRED
RULE WAS FOUND,

"BETA TOKEN"
OF WMES
FOR RULE

## FIG. 6.

400

410 — IDENTIFYING GROUPS OF WMES MEETING EACH CONDITION OF EACH PRODUCTION RULE

420 — FORMING, FOR EACH RULE, A SET OF PAIRS OF WMES:

(1) 1ST WME SATISFIES A 1ST CONDITION OF THE RULE

(2) 1ST WME SATISFIES ALL CONDITION TESTS OF THE 1ST RULE;

(3) 2ND WME SATISFIES THE 2ND CONDITION OF THE RULE; AND

(4) 2ND WME SATISFIES ALL CONDITION TESTS

430 — SUBDIVIDE THE WME PAIRS INTO EQUAL-SIZE SUB-SETS ACCORDING TO TIME TAGS ON ONE OF THE WMES IN EACH PAIR

440 — PROCESS CORRESPONDING SUBSET

450 — FORM NEXT SET FROM LAST SET AND GROUPS OF WMES WHICH SATISFY NEXT CONDITION AS WELL AS ALL CONDITION TESTS

460 — ANY RULES READY TO FIRE — NO

YES

470 — RECORD RULES THAT ARE READY TO FIRE & CORRESPONDING BETA TOKENS

480 — ANY RULES WITH UNTESTED — YES

NO

EXIT TO CONF. RES.

# FIG. 7.

**500**

(MEA)

**510** — SORT RULES USING TIME TAG OR IST WME → **515** COMPARE TO FIND RULE(S) HAVING NEWEST IST WME

**520** — MORE THAN 1 RULE WITH NEWEST IST WME — **505**

NO → **525** SELECT SINGLE RULE WITH NEWEST IST WME → CONTINUE

YES → **530** FURTHER ANALYZE ONLY RULES HAVING NEWEST IST WME ELIMINATE OTHERS

**535** SORT WMES FOR EACH RULE BY RECENCY OF TIME TAGS

**540** — COMPARE, FIRST MOST RECENT WMES FOR DIFFERENT RULES TO OBTAIN RULE WITH NEWEST WME

**545** MORE THAN 1 RULE HAVING NEWEST WME

NO → **550** SELECT SINGLE RULE WITH NEWEST MOST RECENT WME → CONTINUE

YES → **555** FURTHER ANALYZE ONLY RULES HAVING NEWEST WME ELIMINATE OTHERS

**560** COMPARE NEXT MOST RECENT WMES OF EACH OF RULES, FOND NEXT NEWEST WME

**565** MORE THAN RULE HAVING NEXT NEWEST WME

NO → **570** SELECT SINGLE RULE HAVING NEXT NEWEST WME

YES → **575** ANY REMAINING RULES WITH WME NOT TESTED

YES → **585** FURTHER ANALYZE ONLY RULES HAVING NEXT NEWEST WME, ELIMINATE OTHERS

**580** ARBITRARILY SELECT RULE FROM RULES WITH NEXT NEWEST WME

CONTINUE

FIG. 1

20

RULE:

$<T1>$ AND $<T2>$ AND $<T3>$ AND $<T4>$ $\Rightarrow$ $<ACTION\ LIST>$

21  25  21  25  21  25  21  23

LEFT HAND SIDE 22    RIGHT HAND SIDE 24

30

31 START NODE

32A TEST NODE T1

32B TEST NODE T2

32C TEST NODE T3

32D TEST NODE T4

$Pt_1$  $Pt_2$  $Pt_3$  $Pt_4$

33(1) JOIN NODE

36(1) $\beta$   37(1) $\alpha$

$Ct_1$

33(2) JOIN NODE

36(2) $\beta$   37(2) $\alpha$

$Ct_2$

33(3) JOIN NODE

36(3) $\beta$   37(3) $\alpha$

$Ct_3$

34 TERM NODE

FIG. 2

# FIG. 3A

100 COMPILE EXPERT SYSTEM
PROGRAM TO RUN ON SINGLE
PROCESSOR COMPILED PROGRAM
INCLUDING DIRECTIVES TO
COLLECT PROCESSING STATISTICS

101 RUN COMPILED PROGRAM ON A
SINGLE PROCESSOR ONE OR MORE
TIMES TO COLLECT PROCESSING STATISTICS

102 APPLY BETA PARTITION EXPERT SYSTEM
(FIGS. 3C-1 THROUGH 30-4) TO PROCESSING
STATISTICS TO IDENTIFY, FOR EACH RULE,
A NODE THAT IS SUITABLE FOR BETA PARTITIONING

103 ARE THERE ANY RULES FOR WHICH BETA
PARTITION EXPERT SYSTEM IDENTIFIED
NO NODE AS SUITABLE FOR BETTA PARTITIONING?

NO

YES

104 APPLY RULE PARTITION SYSTEM (FIGS. 4A THROUGH 7B)
TO RULES WHICH CONTAINED NO NODE SUITABLE FOR
BETA PARTITIONING

105 RECOMPILE EXPERT SYSTEM PROGRAM TO RUN ON
MULTIPLE PROCESSOR SYSTEM USING BETA PARTITION AND NODE
PARTITION INFORMATION TO GENERATE CODE TO ENABLE
PROCESSORS TO PERFORM BETA AND RULE PARTITIONING
AT APPROPRIATE RULES AND NODES

NODE ACTIVATION
DATA STRUCTURE 120

| | |
|---|---|
| RULE ID | — 121 |
| NODE TYPE | — 122 |
| L/R SIDE | — 123 |
| NODE ID | — 124 |
| NODE NUM | — 125 |
| TOT ACTIV | — 126 |
| TOT EMIT | — 127 |
| TOT COMPS | — 130 |
| MAX ACTIV | — 131 |
| MAX EMIT | — 132 |
| MAX COMPS | — 133 |
| MAX TIME | — 134 |
| TOT TIME | — 135 |
| OPINION | — 136 |
| DECISION | — 137 |
| FLAGS | — 140 |

FIG. 3B-1

RULE DATA STRUCTURE 150

| | |
|---|---|
| 151 | RULE ID |
| 152 | PARTITION TYPE |
| 153 | L/R SIDE |
| 154 | LEVEL |
| 155 | GROUP |
| 156 | OPINION |
| 157 | FLAGS |

FIG. 3B-2

EP 0 403 155 A2

BETA PARTITIONING OPINION RULES 1


RULE H1: IF CONTEXT BETA_HEURISTICS = ACTIVE


<THE_NODE> NODE         RULE ID = <PR>
                                       NODE TYPE = NOT
                                       FLAG T1 = EMPTY


                                       THEN
                                       MODIFY <THE_NODE>
                                       OPINION = -1000
                                       FLAG T.1 = SET


RULE H2: IF CONTEXT BETA_HEURISTICS = ACTIVE
<THE_NODE> NODE         RULE ID = <PR>
                                       NODE NUM = 1
                                       L/R SIDE = L
                                       FLAG T9 = CLEAR


                                       THEN
                                       MODIFY <THE_NODE>
                                       OPINION = OPINION-1
                                       FLAG T9 = SET


FIG. 3C -1

BETA PARTITIONING OPINION RULES 2


RULE H3: IF

   CONTEXT BETA_HEURISTICS = ACTIVE

<THE_NODE> NODE RULE ID = <PR>

   NODE NUM = <NN>

   L/R SIDE = <LR>

   NODE TYPE = AND

   FLAG T2 = CLEAR

  NODE RULE ID = <PR>

    NODE NUM = <NN>

    L/R SIDE $\neq$ <LR>

    MAX COMPS > PARAM <GOOD_MAX_COMPS>


  THEN

   MODIFY <THE_NODE>

   OPINION = OPINION + 7

   FLAG T2 = SET



RULE H4: IF

   CONTEXT BETA_HEURISTICS = ACTIVE

<THE_NODE> NODE

   RULE ID = <PR>

   NODE NUM = <NN>

   L/R SIDE = R

   NODE TYPE = AND

   MAX COMPS > PARAM <GOOD_MAX_COMPS>

   FLAG T8 = CLEAR

<A_PARENT> NODE RULE ID = <PR>

   NODE NUM = <NN> - 1


   L/R SIDE = <LR>

   MAX COMPS = <M_COMP>

<OTHER_PARENT> NODE RULE ID = <PR>

   NODE NUM = <NN> - 1

   L/R SIDE $\neq$ <LR>

   MAX COMPS $\geq$ M_COMP


  THEN

  MODIFY <THE_NODE>

  FLAG T8 = SET

  <OTHER_PARENT>

  OPINION = OPINION + 5

FIG. 3C-2

BETA PARTITIONING OPINION RULES 3

```
RULE H5 IF
        CONTEXT BETA_HEURISTICS = ACTIVE
<THE_NODE> NODE RULE ID = <PR>
            MAX COMPS < PARAM <BAD_MAX_COMPS>
            FLAG T3 = CLEAR

            THEN
            MODIFY <THE NODE>
            OPINION = OPINION - 4
            FLAG T3 = SET

RULE H6 IF
        CONTEXT BETA_HEURISTICS = ACTIVE
<THE_NODE> NODE RULE ID = <PR>
            NODE TYPE = AND
            MAX EMIT > PARAM <GOOD_MAX_EMIT>
            FLAG T4 = CLEAR

            THEN
            MODIFY <THE NODE>
            OPINION = OPINION + 5
            FLAG T4 = SET

RULE H7: IF
        CONTEXT BETA_HEURISTICS = ACTIVE
<THE_NODE> NODE RULE ID = <PR>
            NODE NUM = <NN>
            L/R SIDE = L
            MAX ACTIV > PARAM <GOOD_MAX_ACITV>
            OPINION = <OP>
            FLAG T5 = CLEAR
<L_PARENT> NODE RULE ID = <PR>
            NODE NUM = <NN> - 1
            L/RSIDE = L
            OPINION = <OPL>
<R_PARENT> NODE RULE ID = <PR>
            NODE NUM = <NN> - 1
            OPINION = <OPR>
            L/R SIDE = R

            THEN
            MODIFY <THE_NODE>
            OPINION = <OP> + 3
            FLAG T5 = SET
            <L_PARENT>
            OPINION = <OPL> + 2
            <R_PARENT>
            OPINION = <OPR> + 2
```

FIG. 3 C-3

BETA PARTITIONING OPINION RULES 4

```
      RULE H8 IF
              CONTEXT BETA_HEURISTICS = ACTIVE
  <THE_NODE> NODE RULE ID = <PR>
              L/R SIDE = R
              NODE TYPE = AND
              MAX ACTIV > PARAM <GOOD_MAX_ACTIV>
              FLAG T10 = CLEAR

      THEN
      MODIFY <THE_NODE>
      OPINION = OPINION + 4
      FLAG T10 = SET


      RULE H9 IF
              CONTEXT BETA_HEURISTICS = ACTIVE
  <THE_NODE> NODE RULE ID = <PR>
              NODE TYPE = AND
              TOT EMIT > PARAM <GOOD_TOT_EMIT>
              FLAG T6 = CLEAR

      THEN
      MODIFY <THE_NODE>
      OPINION = OPINION + 2
      FLAG T6 = SET


      RULE H10: IF
              CONTEXT BETA_HEURISTICS = ACTIVE
  <THE_NODE> NODE RULE 10 = <PR>
              NODE NUM = <NN>
              L/R SIDE = <LR>
              NODE TYPE = AND
              FLAG T7 = CLEAR
<SIBLING_NODE> NODE RULE 10 = <PR>
              NODE NUM = <NN>
              L/R SIDE ≠ <LR>
              TOT COMPS > PARAM <GOOD_TOT_COMPS>

      THEN
      MODIFY <THE_NODE>
      OPINION = OPINION + 4
      FLAG T7 = SET
```

FIG. 3C-4

BETA PARTITIONING OPINION RULES 5

```
RULE H 11 : IF
            CONTEXT     BETA_HEURISTICS=ACTIVE
<THE_NODE> NODE         RULE ID = <PR>
                        NODE TYPE = AND
                        MAX TIME> PARAM < GOOD.MAX_TIME>
                        PLAGE T11 = CLEAR
            THEN
               MODIFY <THE_NODE>
                        OPINION = OPINION + 4
                        FLAG T11 = CLEAR


RULE H12 : IF
            CONTEXT     BETA_HEURISTICS = ACTIVE
<THE_NODE> NODE         RULE ID = <PR>
                        NODE TYPE = AND
                        TOT TIME> PARAM <GOOD_TOT_TIME>
                        FLAG T12 = CLEAR
            THEN
               MODIFY <THE_NODE>
                        OPINION = OPEINION + 3
                        FLAG T12 = SET


RULE H13 : IF
            CONTEXT     BETA_HEURISTICS = ACTIVE
<THE_NODE> NODE         RULE ID = <PR?
                        NODE TYPE = AND
                        TOT ACTIV >> TOT EMIT
            THEN
               MODIFY <THE_NODE>
                        OPINION = OPINION - 1
                        FLAG T13 = SET
```

FIG. 3C-5

BETA DECISIONS

RULE D1 : IF

        CONTEXT MAKE_BETA_DECISIONS_ACTIVE

<THE_NODE>    MODE       RULE ID-CPR>

                      NODE NUM = 1

                      L/R SIDE = <PR>

             <OP> OPINION $\geq$ PARAM <GOOD_BETA_CONST>

                      DECISION = <EMPTY>

            NODE       RULE 10 = CPR>

                      NODE NUM=1

                      L/R SIDE $\neq$ <LR>

                      OPINION $\leq$ <OP>

            NODE       RULE ID = <PR>

                      NODE NUM=2

                      L/R SIDE = <LR2>

                      OPINION < <OP> =

PARAM<GOOD_BETA_DELTA>

            NODE       RULE ID = <PR>

                      NODE NUM = 2

                      L/R SIDE $\neq$ <LR2>

                      OPINION < <OP> + PARAM

<GOOD_BETA_DELTA>

        THEN

            MODIFY <THE_NODE>

                      DECISION = BETA_PART_HERE

            MAKE RULE

                      RULE ID = <PR>

                      PARTITION TYPE = BETA

                      LEVEL = 1

                      L/R SIDE = < LR>

                      OPINION = <OP>

FIG 3 D-1

BETA DECISONS

RULE D2 : IF

        CONTECT MAKE_BETA DECISIONS - ACTIVE

<THE_NODE> NODE      RULE ID = <PR>

                      NODE NUM =1

                      L/R SIDE = <LR>

           <OP> OPINION $\geq$ PARAM <GOOD_BETA_CONST>

                      DECISION = EMPTY

        NODE        RULE ID =  <PR>

                      NODE NUM = 1

                      L/R SIDE $\neq$ <LR>

                      OPINION < <OP>

    NOT NODE      RULE ID = <PR>

                      NODE NUM = 2

        NODE        RULE ID = <EOF>

                      NODE NUM = <EOF>

        THEN

            MODIFY <THE_NODE>

                DECISION = BETA_PART_HERE

           MAKE RULE

                RULE ID = <PR>

                PARTITION TYPE = BETA

                LEVEL =1

                L/R SIDE = <LR>

                OPINION = <OP>


RULE D3 : IF

        CONTEXT    MAKE_BETA_DECISIONS = ACTIVE

<THE_NODE> NODE      RULE ID = <PR>

                      OPINION < PARAM <GOOD_BETA_CONST>

                      DECISION = EMPTY

        THEN

            MODIFY <THE_NODE>

                DECISION = NO

FIG 3D-2

BETA DECISIONS

```
       RULE D4 : IF
                   CONTEXT    MAKE_BETA_DECISIONS = ACTIVE
<THE_NODE>         NODE       RULE ID = <PR>
                              NODE NUM = <NN>
                         <OP> OPINION ≥ PARAM <GOOD_BETA_CONST>
                              DECISION = EMPTY
                   NODE       RULE ID = <PR>
                              NODE NUM = <NN>+1
                              OPINION ≥ <OP> + PARAM
                                 <GOOD_BETA_DELTA>
                   THEN
                       MODIFY <THE_NODE>
                           DECISION = NO



       RULE D5 : IF
                   CONTEXT    MAKE_BETA_DECISIONS + ACTIVE
<THE_NODE>         NODE       RULE ID + <PR>
                              NODE NUM = <NN>
                              L/R SIDE = <LR>
                         <OP> OPINION ≥ PARAM <GOOD_BETA_CONST>
                              DECISION = EMPTY
<SAILING_NODE> NODE           RULE ID = <PR>
                              NODE NUM = <NN>
                              L/R SIDE ≠ <LR>
                        <OP2> OPINION ≤ <OP>
                   NODE       RULE ID = <PR>
                              NODE NUM = <NN>-1
                              DECISION = NO
                              L/R SIDE = L
              NOT NODE        RULE ID = <PR>
                              NODE NUM = <NN>-1
                   NODE       RULE ID = EOF
                              NODE NUM = EOF
                THEN
                   MODIFY <THE_NODE>
                           DECISION = BETA
                   MAKE RULE
                           RULE ID = <PR
                           PARTITION TYPE = BETA_PART_HERE
                           LEVEL = <NN>
                           L/R SIDE = <LR>
                           OPINION = <OP>
                   MAKE CONTEXT FLUSH_ALL_NODES=ACTIVE
```

FIG 3D-3

BETA DECISIONS **4**


```
RULE D6 : IF
            CONTEXT    MAKE_BETA_DECISIONS=ACTIVE
<THE_NODE>    NODE    RULE ID = <PR>
                      NODE NUM = <NN>
                <OP> OPINION ≥ PARAM <GOOD_BETA_CONST>
                      DECISIONS EMPTY
            NODE     RULE ID = <PR>
                     NODE NUM = <NN>
                     L/R SIDE ≠ <LR>
                     OPINION ≤ <OP>
            NODE     RULE ID = <PR>
                     NODE NUM = <NN>-1
                     L/R SIDE = L
                     DECISION = NO
            NODE     RULE ID = <PR>
                     NODE NUM = <NN>-1
                     L/R SIDE = R
                     DECISION = NO
            NODE     RULE ID = <PR>
                     NODE NUM = <NN>H
                     L/R SIDE = L
                     OPINION < <OP> + PARAM <GOOD_BETA_DELTA>

            NODE     RULE ID = <PR>
                     L/R SIDE = R
                     OPINION < <OP> + PARAM <GOOD_BETA_DELTA>

      THEN
            MODIFY <THE_NODE>
                  DECISION = BETA
            MAKE RULE
                  RULE ID = <PR>
                  PARTITION TYPE = BETA_PART_HERE
                  LEVEL = <NN>
                  L/R SIDE = <LR>
                  OPINION = <OP>
            MAKE CONTEXT FLUSH_ALL_NODES=ACTIVE
```


FIG 3D-4

RULE A

RULE B

RULE C

110

$TC_1$ $TC_2$ $TC_3$ $TC_4$ $TC_5$ $TC_6$

$TC_1$ $TC_2$ $TC_3$ $TC_7$ $TC_8$

$TC_1$ $TC_2$ $TC_3$ $TC_4$ $TC_9$

112

108

FIGURE 4A

EP 0 403 155 A2

RULE A

$TC_1$ $TC_2$ $TC_3$ $TC_4$ $TC_5$ $TC_6$ $TC_9$ $TC_7$ $TC_8$

RULE C

RULE B

110 112 114

$CT_1$ $CT_2$ $CT_3$ $CT_4$ $CT_5$

$\mu_1$ $\mu_2$ $\mu_3$ $\mu_4$ $\mu_5$

108

FIGURE 4B

| RULE A | $\mu_1\mu_2\mu_3$ | $T_A$ | $\Pi_A$ |
|--------|------------------|-------|---------|
| RULE B | $\mu_1\mu_4$ | $T_B$ | $\Pi_B$ |
| RULE C | $\mu_1\mu_2\mu_5$ | $T_C$ | $\Pi_C$ |

| RULE X | | $T_X$ | $\Pi_Z$ |
|--------|--|-------|---------|

160

164 166 168 170

162

164 166 168 170

162

164 166 168 170

## FIG. 5

FIG.7B

```
PERMANENT ASSIGN THE SELECTED
RULE TO THE PARTITION WHCIH HAS
THE LOWEST TOTAL COS, IF MORE
THAN ONE PARTITION HAS THE
LOWEST TOTAL COST, ASSIGN THE
RULE TO THE PARTITION HAVING THE
LOWEST TOTAL COST AND THE
LOWEST NUMBER n
```
300

| ARE THER ANY UNASSIGNED RULES? | NO → EXIT |
|--------------------------------|-----------|

310

YES ↓

TO STEP 220

EP 0 403 155 A2

| CYCLE i | $\mu_1$ | $\mu_2$ | $\mu_3$ | $\mu_4$ | $\mu_5$ | $\cdots$ | $\mu_m$ |
|---------|---------|---------|---------|---------|---------|----------|---------|
| 1 | $t_{11}$ | $t_{12}$ | $t_{13}$ | $t_{14}$ | $t_{15}$ | $\cdots$ | $t_{1m}$ |
| 2 | $t_{21}$ | $t_{22}$ | $t_{23}$ | $t_{24}$ | $t_{25}$ | $\cdots$ | $t_{2m}$ |
| 3 | $t_{31}$ | $t_{32}$ | $t_{33}$ | $t_{34}$ | $t_{35}$ | $\cdots$ | $t_{3m}$ |
| $\vdots$ | | | | | | | |
| P | $t_{P1}$ | $t_{P2}$ | $t_{P3}$ | $t_{P4}$ | $t_{P5}$ | $\cdots$ | $t_{Pm}$ |
| TOTAL | $S_1$ | $S_2$ | $S_3$ | $S_4$ | $S_5$ | | $S_M$ |

172

174

$$e_i = ((\mu_1, t_{i1})(\mu_2, t_{i2}) \cdots (\mu_m, t_{i,m})$$

## FIG. 6

FIG.7A

ORDER THE RULES IN
DESCENDING ORDER ACCORDING — 200
TO THE TOTAL TIME SPENT IN RULE

GENERATE PARTITION SET $\pi_n$  WHERE — 210
n IS AN INTEGER RANGING
FROM 1 TO N, THE NUMBER OF
CPU'S IN THE MULTIPROCESSOR
SYSTEM

—————— FROM STEP 310

SELECT THE MOST TIME CONSUMING — 220
UNASSIGNED RULE AS IDENTIFIED
BY LOOKASIDE TABLE

SET INDEX k = 1  — 230

TEMPORARILY ASSIGN SELECTED RULE — 240
TO $\pi_\varphi$

GIVEN THAT TEMPORARY ASSIGNMENT AS
WELL AS ANY PREVIOUS PERMANENT
ASSIGNMETNS, COMPUTE THE TIME
NEEDED TO THE ASSIGNED RULES IN EACH — 250
PARTITION $\pi_n$  $1 \leq n \leq N$ FOR EACH CYCLE

FOR EACH CYCLE, SELECT THE MAXIMUM — 260
COMPUTED TIMES ASSOCIATED WITH THE SET
OF ALL PARTITIONS

SUM THE MAXIMUM SELECTED TIMES
OVER ALL OF THE CYCLES TO COMPUTE — 270
A TOTAL TIME CORRESPONDING TO
THAT TEMPORARY ASSIGNMENT

INCREMENT k — 280

IS k > n ? — 290      NO

YES